# EUROPÄISCHE PATENTSCHRIFT

(11) **EP 3 423 859 B1**
(45) Veröffentlichungstag und Bekanntmachung des Hinweises auf die Patenterteilung: **29.04.2026**
(21) Anmeldenummer: 17707792.2
(22) Anmeldetag: 22.02.2017
(51) Int. Cl.: G01S 7/4865, G01S 17/10

(54) **VORRICHTUNG ZUR WANDLUNG EINER ZEITLICHEN VERZÖGERUNG EINES ZWISCHEN EINEM SENDER UND EINEM EMPFÄNGER ÜBERTRAGENEN SIGNALS**
DEVICE FOR CONVERTING A TEMPORAL DELAY OF A SIGNAL TRANSMITTED BETWEEN A TRANSMITTER AND A RECEIVER
DISPOSITIF DE TRANSFORMATION D'UN TEMPS DE RETARD D'UN SIGNAL TRANSMIS ENTRE UN ÉMETTEUR ET UN RÉCEPTEUR

(30) Priorität: 01.03.2016 DE 102016103689; 01.03.2016 DE 102016103688; 01.03.2016 DE 102016103690; 09.05.2016 DE 102016108491; 09.05.2016 DE 102016108490; 09.05.2016 DE 102016108488; 09.05.2016 DE 102016108489; 09.05.2016 DE 102016108492; 09.05.2016 DE 102016108494; 09.05.2016 DE 102016108495; 09.05.2016 DE 102016108497; 09.05.2016 DE 102016108496
(43) Veröffentlichungstag der Anmeldung: 09.01.2019
(73) Patentinhaber: Elmos Semiconductor SE, 51379 Leverkusen (DE)
(72) Erfinder: LIEM, Marco, 10317 Berlin (DE); SROWIG, André, 69115 Heidelberg (DE)
(74) Vertreter: dompatent
(86) Internationale Anmeldenummer: PCT/EP2017/054073
(87) Internationale Veröffentlichungsnummer: WO 2017/148772

(56) Entgegenhaltungen:
- EP-A1- 2 924 460
- EP-A2- 0 473 082
- EP-A2- 1 293 803
- US-A1- 2015 160 067

## Beschreibung

Die Erfindung betrifft eine Vorrichtung zur Wandlung einer zeitlichen Verzögerung eines Ausgangssignals eines Empfängers einer Übertragungsstrecke gegenüber einem von dem Sender der Übertragungsstrecke gesendeten Sendesignals. Insbesondere betrifft die Erfindung
- eine optische Laufzeitmessung nach einem ein- oder zweistufigen Delta-Sigma-Verfahren und zugehörige Vorrichtung,
- ein Verfahren zur Zeit-zu-Digital-Wandlung mittels eines Sende-Wavelets und eines Analyse-Wavelets mit geregelter Verzögerung,
- ein Verfahren zur Zeit-zu-Digital-Wandlung mit geregelter zeitlicher Wavelet-Kompression mittels eines Sende-Wavelets und eines Analyse-Wavelets mit geregelter Verzögerung,
- ein Verfahren zur Zeit-zu-Digital-Wandlung mit geregelter zeitlicher Wavelet-Kompression mittels eines Sende-Wavelets mit geregelter Verzögerung und eines Analyse-Wavelets,
- eine Vorrichtung zur Zeit-zu-Digital-Wandlung mittels eines Sende-Wavelets und eines Analyse-Wavelets mit geregelter Verzögerung,
- eine Vorrichtung zur Zeit-zu-Digital-Wandlung mittels eines Sende-Wavelets mit geregelter Verzögerung und eines Analyse-Wavelets,
- eine Vorrichtung zur Zeit-zu-Digital-Wandlung mit geregelter zeitlicher Wavelet-Kompression mittels eines Sende-Wavelets und eines Analyse-Wavelets mit geregelter Verzögerung,
- Vorrichtung zur Zeit-zu-Digital-Wandlung mit geregelter zeitlicher Wavelet-Kompression mittels eines Sende-Wavelets mit geregelter Verzögerung und eines Analyse-Wavelets und
- eine optische Laufzeitmessung nach einem ein- oder zweistufigen Delta-Sigma-Verfahren und zugehörige Vorrichtung.

Die Erfindung richtet sich auf ein Verfahren zur Wandlung einer zeitlichen Verzögerung Δt eines Empfängerausgangssignals S0 gegenüber einem verzögerten Sendesignal S5d, die das Sendewavelet-Signal S5d in einer Übertragungsstrecke I1 beliebiger physikalischer Natur bei der Wandlung in das Empfängerausgangssignal S0 erfahren hat, in einen Digital-Wert, insbesondere binären Wert.

In vielen Anwendungen ist es notwendig, Verzögerungszeiten eines Signals gegenüber einem gesendeten Signal zu bestimmen. Solche Anwendungen betreffen beispielsweise die Laufzeit elektromagnetischer Wellen, die Laufzeit von elektromagnetischen Wellen oder von Schallwellen (z.B. zur Abstandsbestimmung für z.B. die Erstellung von 3D-Bildern, wie beispielhaft in DE-A-101 53 742 und WO-A-02/25805 beschrieben, oder die Entfernungsbestimmung) die Flugzeit von Teilchen, Reaktionszeiten in der Chemie, Zerfallszeiten in der Teilchenphysik etc.

Diese Verzögerungszeiten sollen typischerweise in digitalen Datenverarbeitungsanlagen weiterverarbeitet werden.

Vor diesem Hintergrund ist die digitalisierende Bestimmung solcher Verzögerungszeiten ein grundsätzliches Problem der Schaltungstechnik.

Aus der Literatur sind mannigfache Methoden der Delta-Sigma-Wandlung von Signalamplituden bekannt. Allen gemeinsam ist, dass sie eine amplitudengesteuerte Regelschleife aufweisen. Die Amplitude ist bei kleinen Abweichungen sehr stark durch Rauschen und Quantisierungsfehler behaftet, was die Auflösung begrenzt. Soll die Verzögerung eines analogen Empfängerausgangssignals gegenüber einem digitalen Sendesignal bestimmt werden, so wird das analoge Empfängerausgangssignal mit einem negativ zurückgekoppelten analogen Rückkoppelsignal zu einem analogen Filtereingangssignal summiert. Das analoge Filtereingangssignal gibt den gewichteten Unterschied zwischen dem amplitudenwertdiskreten Ausgangssignal und dem analogen Empfängerausgangssignal an. Ziel im Stand der Technik ist es, diese Abweichung zu Null zu regeln. Daher wird das analoge Filtereingangssignal mit Hilfe eines ersten Filters im einfachsten Fall zum analogen Filterausgangssignal integriert. Kompliziertere Filteralgorithmen sind denkbar. Das analoge Filterausgangssignal wird dann in ein amplitudenwertdiskretes Ausgangssignal gewandelt. Dieses amplitudenwertdiskrete Ausgangssignal wird dann mit einem analogen Faktor zum analogen Rückkoppelsignal multipliziert und der Regelschleife wieder zugeführt. Um nun die Verzögerung zwischen dem somit amplitudenwertdiskreten Ausgangssignal und dem digitalen Sendesignal zu bestimmen, werden diese dann auf digitalem Wege miteinander verglichen. Die Bestimmung der Verzögerung in einer Übertragungsstrecke I1 erfolgt also in den drei unabhängigen Schritten
- Erzeugen des digitalen Sendesignals und Einspeisung desselben in die Übertragungsstrecke I1 und Entnehmen des Empfängerausgangssignals am Ende der Übertragungsstrecke;
- Bildung eines amplitudenwertdiskreten Ausgangssignals, das das Empfängereingangssignal repräsentiert;
- Vergleich des so gebildeten amplitudenwertdiskreten Ausgangssignals mit dem digitalen Sendesignal und Ausregelung einer Amplitudendifferenz zu Null.

Jede dieser drei Stufen führt zu Fehlern in der Verarbeitung bei der Ermittlung eines digitalen Wertes, der die Verzögerung in der Übertragungsstrecke repräsentiert.

Eine solche amplitudenwertdiskrete Vorrichtung ist beispielsweise aus der EP-A-2 924 460 bekannt. Bei dem dort offenbarten Verfahren wird der amplitudenmäßige Anteil der Basis-Wavelets an einem Eingangssignal durch Skalar-Produktbildung ermittelt, die durch Multiplikation und anschließende Tiefpassfilterung realisiert werden kann. In einem zweiten Schritt werden die so ermittelten Amplitudenanteilswerte der jeweiligen Basis-Wavelets mit diesen Basis-Wavelets multipliziert, mit minus 1 multipliziert und zu einem Kompensationssignal zusammengemischt, das einen Kompensationssender steuert, der ebenfalls in den Empfänger der Vorrichtung nach EP-A-2 924 460 einstrahlt. Ist der Regelkreis stabil, so geben die einzelnen Amplitudenwerte der jeweiligen Basis-Wavelets das Messergebnis als Messwertevektor wieder. In Versuchen hat sich gezeigt, dass das im Folgenden beschriebene erfindungsgemäße Verfahren dem Verfahren und der Vorrichtung nach EP-A-2 924 460 überlegen ist und mit der Erfindung eine um mindestens eine Größenordnung höhere Auflösung erreicht werden kann.

Ein Verfahren zur Wandlung einer zeitlichen Verzögerung eines zwischen einem Sender und einem Empfänger übertragenen Signals mit den Merkmalen des Oberbegriffs des Anspruchs 1 ist aus EP-A-0 473 082 bekannt.

Der Erfindung liegt die Aufgabe zugrunde, eine Lösung zu schaffen, die die obigen Nachteile des Stands der Technik in Form der auftretenden Prozessfehler reduziert.

Diese Aufgabe wird erfindungsgemäß gelöst durch eine Vorrichtung zur Wandlung einer zeitlichen Verzögerung eines Ausgangssignals S0 eines Empfängers E einer Übertragungsstrecke I1 gegenüber einem von einem Sender S in die Übertragungsstrecke I1 hinein gesendeten Sendewavelet-Signals S5d in einen Digital-Wert, insbesondere in einen Binär-Wert, mit
- einem Sendewaveletsignal-Generator WG1 zur Erzeugung des Sendewavelet-Signals S5d auf Basis eines ersten zeitlichen Wavelet WL1 mit einem ersten Bezugszeitpunkt t₀, wobei das Sendewavelet-Signal S5d hinsichtlich seiner zeitlichen Lage, d.h. seines Anfangs- und/oder seines Endzeitpunkts, wobei beide Zeitpunkte veränderbar sind, und/oder hinsichtlich seiner zeitlichen Ausdehnung oder Kompression, d.h. des zeitlichen Abstands zwischen seinem Anfangs- und Endzeitpunkt, wobei beide Zeitpunkte gleichsinnig oder gegensinnig veränderbar sind, und/oder hinsichtlich seiner Amplitude durch betreffende, von dem Sendewaveletsignal-Generator WG1 vorgebbare Parameter definiert ist,
- einem ersten Analysewaveletsignal-Generator WG2 zur Erzeugung eines ersten Analysewavelet-Signals WS1 auf Basis eines zweiten zeitlichen Wavelets WL2 mit einem zweiten Bezugszeitpunkt t₀+tᵥ, wobei das erste Analysewavelet-Signal WS1 hinsichtlich seiner zeitlichen Lage, d.h. seines Anfangs- und/oder seines Endzeitpunkts, wobei beide Zeitpunkte veränderbar sind, und/oder hinsichtlich seiner zeitlichen Ausdehnung oder Kompression, d.h. des zeitlichen Abstands zwischen seinem Anfangs- und Endzeitpunkt, wobei beide Zeitpunkte gleichsinnig oder gegensinnig veränderbar sind, und/oder hinsichtlich seiner Amplitude durch betreffende, von dem ersten Analysewaveletsignal-Generator WG2 vorgebbare Parameter definiert ist,
- einer Skalarprodukteinheit WS1,SO zur Berechnung eines zeitlichen Skalarproduktsignals S8 aus dem Empfängerausgangssignal S0 und dem ersten Analysewavelet-Signal WS1,
- einem Zeit-zu-Digital-Wandler TDC zur Bildung eines zeitkontinuierlichen, wertdiskreten, insbesondere binären Bewertungssignal S9 für die Dauer eines vorgebbaren Messzeitintervals durch Vergleich der Größe des Skalarproduktsignals S8 mit einem ersten Referenzwert Ref und zum Wechseln des Wertes des Bewertungssignals S9 zu demjenigen Zeitpunkt t₀+tₛ, zu dem das Skalarproduktsignal S8 gleich dem Referenzwert Ref oder größer als der Referenzwert Ref wird, also die durch den Referenzwert definierte Schwelle "kreuzt" bzw. "schneidet", wobei das zeitkontinuierliche wertdiskrete Bewertungssignal die Verzögerungszeit repräsentiert, und
- einem Regler CTR zur Änderung entweder mindestens eines der das Sendewavelet-Signal S5d definierenden Parameter im Sendewaveletsignal-Generator WG1 oder mindestens eines der das erste Analysewavelet-Signal WS1 definierenden Parameter in dem ersten Analysewaveletsignal-Generator WG2 oder sowohl mindestens eines der das Sendewavelet-Signal S5d definierenden Parameter in dem Sendewaveletsignal-Generator WG1 als auch mindestens eines der das erste Analysewavelet-Signal WS1 definierenden Parameter in dem ersten Analysewaveletsignal-Generator WG2 definierenden Parameter, und zwar in Abhängigkeit von dem Zeitpunkt t₀+tₛ, zu dem relativ zu dem Bezugszeitpunkt t₀ des ersten zeitlichen Wavelet WL1 des Sendewavelet-Signals S5d das Skalarproduktsignal S8 gleich dem Referenzwert Ref oder größer als der Referenzwert Ref ist, also die durch den Referenzwert definierte Schwelle "kreuzt" bzw. "schneidet", wobei der Zeitpunkt t₀+tₛ, zu dem relativ zu dem Bezugszeitpunkt t₀ des ersten zeitlichen Wavelet WL1 des Sendewavelet-Signals S5d das Skalarproduktsignal S8 gleich dem Referenzwert Ref oder größer als der Referenzwert Ref ist, der Arbeitszeitpunkt ist,
- wobei das erste Wavelet WL1 des Sendewaveletsignal-Generators WG1 und das zweite Wavelet WL2 des ersten Analysewaveletsignal-Generators WG2 so ausgestaltet sind,
- wobei der Wert des Skalarproduktsignals S8 in einem zeitlichen Bereich um den zeitlichen Arbeitspunkt herum monoton fallend oder monoton steigend, von der zeitlichen Verzögerung Δt des Sendewavelet-Signals S5d von dem Sender der Übertragungsstrecke I1 zu dessen Empfänger E abhängt,
   und wobei die zeitliche Verzögerung Δt in einem zeitlichen Intervall liegt, dessen Länge von Null verschieden ist.

Bei der erfindungsgemäßen Vorrichtung werden also Wavelets genutzt, um eine zeitliche Verzögerung in einen Digital-Wert, insbesondere in einen Binär-Wert zu wandeln. Wavelets im Sinne der Erfindung sind Signalformen, wie sie in https://en.wikipedia.org/wiki/Wavelet#Definition of a wavelet vom 21. Februar 2017 beschrieben sind. Ein Wavelet ist also eine wellenförmige Oszillation mit einer Amplitude, deren Betrag bei null beginnt, dann ansteigt bzw. wechselseitig ansteigt und abfällt, um zum Ende wieder bei null zu enden. Ein Wavelet kann typischerweise als eine "kleine Welle" visualisiert werden, wie beispielsweise eine Aufzeichnung eines Seismographen oder eines Herzschlagmonitors. Im Allgemeinen werden Wavelets zweckmäßig entwickelt und haben spezielle Eigenschaften, die sie für die Signalverarbeitung nützlich machen. Wavelets können kombiniert werden, und zwar unter Verwendung von Umkehr-, Verschiebe-, Multiplizier- und Integrier-Techniken, die auch als Konvolution bezeichnet werden, und können Bereiche von bekannten Signalen aufweisen, um Informationen aus unbekannten Signalen zu extrahieren.

Bei der Erfindung wird über einzelne Messzeitintervalle hinweg gearbeitet. Diese Messzeitintervalle werden durch die Länge der verwendeten Wavelets bestimmt, können aber auch größer als diese sein. In jedem Fall liegen der Beginn und das Ende der Wavelets innerhalb eines Messzeitintervalls. Vorzugsweise sind die Messzeitintervalle sämtlich gleich lang.

Wie oben ausgeführt, weist die erfindungsgemäße Vorrichtung unter anderem auch eine Skalar-Produkteinheit auf. Im einfachsten Fall wird das Skalar-Produkt zweier Signale durch Integration über das Produkt der Momentanwerte gebildet, und zwar über ein Messzeitintervall hinweg. Durch die Verwendung von Wavelets, die mit dem Beginn oder nach dem Beginn des Messzeitintervalls und mit dem Ende oder vor dem Ende des Messzeitintervalls Null sind, wird sichergestellt, dass die Integration automatisch beendet ist, ohne dass es hierfür einer besonderen Vorrichtung bedarf. Der Integrator kann dann also permanent arbeiten, was die Ansteuerung des Integrators vereinfacht.

Das Skalar-Produkt muss über das Messzeitintervall hinweg ausgeführt werden, damit das Skalar-Produkt zweier orthogonaler Wavelets tatsächlich Null wird.

Ganz allgemein gilt, dass das Skalar-Produkt <a,b> zweier Signale a und b folgende Eigenschaft für die Signale a,b,c haben sollte: <a,g*b> = g*<a,b> mit g als reeler Zahl <a,b+c> = <a,b> + <a,c>. Des weiteren sollte bevorzugt zu jedem Signal a ein Signal ai existieren mit <a,ai> = 1 (Existenz des inversen Elements). Dies ist jedoch nicht zwingend, sondern nur vorteilhaft. Schließlich sollte es bevorzugt ein Signal 0 geben mit der Eigenschaft <a,0> = 0. Das Skalar-Produkt kann, muss aber nicht kommutativ sein: <a,b> = <b,c>.

Gemäß einer vorteilhaften Ausgestaltung der Erfindung ist vorgesehen, dass die Skalarprodukteinheit WS1,SO versehen ist mit einem Multiplizierer M1 zur Berechnung eines Filtereingangssignals S2 als Multiplikation des Empfängerausgangssignals SO und des ersten Analysewavelet-Signals WS1 und mit einem ersten Filter F1, insbesondere einem Tiefpassfilter, zur Filterung des Filtereingangssignals S2. Vorteilhafter ist das erste Filter F1 ein Integrator oder wird als solcher betrieben.

Gemäß einer Weiterbildung kann die Vorrichtung ferner aufweisen:
- eine Korrektureinheit KE zur Bildung eines Korrektursignals K1 in Abhängigkeit von dem Zeitpunkt t₀+tₛ, zu dem relativ zu dem Bezugszeitpunkt t₀ des ersten zeitlichen Wavelet WL1 des Sendewavelet-Signals S5d das Skalarproduktsignal S8 gleich dem Referenzwert Ref oder größer als der Referenzwert Ref wird,
- einem Summierer S1 zur Bildung eines korrigierten Skalarproduktsignals S10 durch Addition des Korrektursignals K1 zum Skalarproduktsignal S8 und
- einem zweiten Filter F2, insbesondere einem Tiefpassfilter, zur Filterung des korrigierten Skalarproduktsignals S10 zur Bildung eines gefilterten Skalarproduktsignals S11,
- wobei das gefilterte Skalarproduktsignal S11 dem Zeit-zu-Digital-Wandler TDC zur Bildung des Bewertungssignals S9 zuführbar ist.

Vorteilhafterweise ist das zweite Filter F2 ein Integrator oder wird als solcher betrieben.

Vorteilhafterweise ist der Zeit-zu-Digital-Wandler TDC ein Komparator.

Erfindungsgemäß wurde erkannt, dass die Durchführung der zeitlichen Digitalisierung in einem einzigen Schritt die Abfolge der durchzuführenden Schritte auf die folgende Sequenz reduziert:
1. Erzeugen des digitalen Sendesignals und Einspeisung in die Übertragungsstrecke I1 und Entnehmen des Empfängerausgangssignals aus der Übertragungsstrecke;
2. Bildung und zeitliche Ausregelung eines zeitkontinuierlichen, wertdiskreten Bewertungssignals gegenüber dem Sendesignal, das einen Schnittpunkt des Filterausgangssignals mit einem Referenzwert repräsentiert, wobei das zeitkontinuierliche, wertdiskrete Bewertungssignal die Verzögerungszeit repräsentiert.

Eine Amplitudendiskretisierung durch Ausregelung der Amplitude eines Filtereingangssignals findet also (im Gegensatz zum Stand der Technik) bei der Erfindung ausdrücklich nicht mehr statt. Es werden im Gegensatz zum Stand der Technik also erfindungsgemäß weder eine Amplitude noch Verstärkungen oder Amplituden von in der Regelschleife verwendeten Generatorausgangssignalen noch die Amplitude des Sendesignals geregelt. Ziel der erfindungsgemäßen Regelung ist es somit, im Gegensatz zum Stand der Technik nicht mehr das Filtereingangssignal so zu regeln, dass die Amplitudenwerte übereinstimmen, sondern vielmehr so zu regeln, dass der zeitliche Schnittpunkt des Filtereingangssignals mit einem ersten konstanten Amplitudenwert mit dem zeitlichen Schnittpunkt des Empfängereingangssignals mit einem zweiten Amplitudenwert übereinstimmt.

Dieser erste und zweite Amplitudenwert sind typischerweise aber nicht notwendigerweise null und gleich.

Die Aufgabe zur Wandlung einer zeitlichen Verzögerung Δt des Empfängerausgangssignals S0 gegenüber einem Sendewavelet-Signal S5d, das die Verzögerung bei seiner Übertragung längs einer Übertragungsstrecke I1 beliebiger physikalischer Natur erfahren hat, wird erfindungsgemäß konkret durch folgende Schritte gelöst:
- Als Erstes wird das Sendewavelet-Signal S5d auf Basis eines ersten zeitlichen Wavelets WL1 erzeugt. In jedem Zeitabschnitt Tₛ, in dem ein Wavelet erzeugt wird, hat dieses Wavelet einen ersten Bezugszeitpunkt t₀. Dieser Bezugszeitpunkt t₀ dient im Folgenden als zeitlicher Bezugspunkt innerhalb eines Zeitabschnitts Tₛ. Die Zeitabschnitte Tₛ überlappen sich vorzugsweise nicht.
- Als Zweites wird nun das somit erzeugte Sendewavelet-Signal S5d in die besagte Übertragungsstrecke I1 eingespeist. Es durchläuft die Übertragungsstrecke I1 und wird am Ende der Übertragungsstrecke I1 in das Empfängerausgangssignal S0 gewandelt. Typischerweise befindet sich am Ende der Übertragungsstrecke I1 ein Empfänger, der dieses Empfängerausgangssignal S0 erzeugt. Für das hier beschriebene Problem ist es irrelevant, welcher Natur die Übertragungsstrecke I1, der Sender oder der Empfänger sind.
- Als Drittes folgt das Erzeugen eines ersten Analysewavelet-Signals WS1 auf Basis eines zweiten Wavelets WL2. Dieses zweite Wavelet WL2 ist typischerweise nicht identisch mit dem ersten Wavelet WL1 und hat typischerweise einen anderen, zweiten Bezugszeitpunkt t₀+tᵥ in zumindest dem betreffenden Zeitabschnitt. Typischerweise ist es mit einer ersten Verzögerungszeit tᵥ gegenüber dem ersten Bezugszeitpunkt t₀ des ersten Wavelets WL1 in dem Zeitabschnitt versehen.
- Als Viertes folgt die Bildung eines zeitlichen Skalar-Produktsignals S8 durch Skalar-Produktbildung zwischen dem Empfängerausgangssignal S0 und dem ersten Analysewavelet-Signal WS1. Die Natur des Skalarprodukts ist Gegenstand von weiteren Ausformungen der Erfindung.
- Als Fünftes folgt die Bildung eines zeitkontinuierlichen, wertdiskreten Bewertungssignals S9 durch Vergleich des Werts des Skalar-Produktsignals S8 mit einem ersten Referenzwert Ref und Wechsel des Wertes des zeitkontinuierlichen, wertdiskreten Bewertungssignals S9. Dies geschieht vorzugsweise in einem Komparator, und zwar zu demjenigen (Schneide-) Zeitpunkt, zu dem (in Relation zum ersten Bezugszeitpunkt) der Wert des Skalar-Produktsignals S8 einen Referenzwert Ref annimmt.
- Als Sechstes folgt eine Änderung der ersten Verzögerungszeit tᵥ in Abhängigkeit vom Schneidezeitpunkt t₀+tₛ. Die Änderung der Verzögerungszeit tᵥ hängt somit von dem Zeitpunkt des Wertwechsels des Bewertungssignals S9 und nicht von dessen Amplitudenwert ab, was der wesentliche Unterschied der Erfindung zum Stand der Technik ist. Erfindungsgemäß wurde erkannt, dass sich ein solcher Zeitpunkt des Wertwechsels des Bewertungssignals S9 wesentlich genauer feststellen lässt als eine konkrete Amplitude. Hierdurch verbessert sich die zeitliche Auflösung um mindestens den Faktor 10. Statt der Regelung des zweiten Bezugszeitpunkts t₀+tᵥ des zweiten Wavelets WL2 kann beispielsweise auch eine Regelung des ersten Bezugszeitpunkts t₀+tᵥ des ersten Wavelets WL1 erfolgen, wobei dann vorzugsweise das zweite Wavelet WL2 einen zweiten Bezugszeitpunkt t₀ ohne Verzögerung tᵥ aufweist. Natürlich lassen sich diese beiden Regelungssysteme mischen. Wavelets zeichnen sich dadurch aus, dass sie für die Transformation eine Verzögerung tᵥ und ferner eine Signalkompression α aufweisen. Dies entspricht der Phase φ und der Frequenz ω der Fourier-Transformation. Dementsprechend ist bei einer weiteren Variante der Erfindung vorgesehen, statt der Verzögerung tᵥ die erste Kompression α₁ des ersten Wavelets WL1 bei der Erzeugung des verzögerten Sendesignals in Abhängigkeit von dem Zeitpunkt des Wertwechsels des Bewertungssignals S9 zu regeln oder die zweite Kompression α₂ des zweiten Wavelets WL2 in Abhängigkeit von dem Zeitpunkt des Wertwechsels des Bewertungssignals S9 zu regeln. Selbstverständlich können auch diese Regelverfahren kombiniert werden. Die Kombination kann auch mit der Regelung der Verzögerung erfolgen. Eine Kombination mehrerer Analysewavelet-Signale WS1,WS2 in entsprechenden Pfaden ist möglich.

Wie bereits erwähnt, weist ein Regelverfahren auf Basis eines Signalwert-Wechsels (Wechsel des Werts bzw. Zustands des Bewertungssignals von 0 auf 1 (oder umgekehrt), oder 1 auf 2 etc.) eine wesentlich höhere zeitliche Auflösung auf als ein Verfahren auf Basis eines Amplitudenwertes.

In einer weiteren Ausführungsform der Erfindung werden potenzielle Fehler weiter minimiert. Dies erfolgt durch die Bildung eines Korrektursignals K1 in Abhängigkeit vom Schneidezeitpunkt t₀+tₛ. Als nächster Schritt folgt die Bildung eines korrigierten Skalar-Produktsignals S10 durch Addition des Werts des Korrektursignals K1 zum Wert des Skalar-Produktsignals S8. Die Filterung des korrigierten Skalar-Produktsignals S10 erzeugt dann das gefilterte Skalar-Produktsignal S11. Hierbei handelt es sich in der Regel um einen Integrator oder ein Tiefpassfilter. Das so gebildete gefilterte Skalar-Produktsignal S11 wird dann an Stelle des Skalar-Produktsignals S8 zur Bildung des zeitkontinuierlichen, wertdiskreten Bewertungssignals S9 verwendet. Dies hat den Vorteil, dass der resultierende Auflösungsfehler weiter minimiert wird.

Eine mögliche konkrete Realisierung der Skalar-Produktbildung umfasst die Bildung eines Filtereingangssignals S2 durch Multiplikation des Empfängerausgangssignals S0 mit dem ersten Analysewavelet-Signal WS1, sowie das anschließende Filtern des Filtereingangssignals S2 zum Skalar-Produktsignal S8. Auch diese Filterung wird typischerweise als Integration und/oder Tiefpassfilterung ausgeführt.

An die Wavelets werden bevorzugt gewisse Anforderungen gestellt, die jedoch nicht zwingend erforderlich sind. Es ist besonders bevorzugt, wenn das erste Wavelet WL1 und das zweite Wavelet WL2 so gewählt sind, dass der Wert des Skalar-Produktsignals S8 monoton fallend oder streng monoton fallend oder monoton steigend oder streng monoton steigend von der zeitlichen Verzögerung Δt des Sendewavelet-Signals S5d in der Übertragungsstrecke I1 zum Empfängerausgangssignal S0 abhängt. Dies sollte zumindest in einem vorbestimmten Bereich der Fall sein. Die zeitliche Verzögerung Δt sollte in einem zeitlichen Intervall liegen, dessen Länge von Null verschieden ist.

Die Erfindung wird nachfolgend anhand mehrerer Ausführungsbeispiele und unter Bezugnahme auf die Zeichnung näher erläutert. Im Einzelnen zeigen:
- Fig. 1: eine vereinfachte Prinzipskizze einer Vorrichtung, die das erfindungsgemäße Verfahren durch Regelung des ersten Analysewaveletsignal-Generators WG2 ausführt,
- Fig. 2: eine vereinfachte Prinzipskizze einer Vorrichtung, die das erfindungsgemäße Verfahren durch Regelung des Sendewaveletsignal-Generators WG1 ausführt,
- Fig. 3: eine vereinfachte Prinzipskizze einer Vorrichtung, die das erfindungsgemäße Verfahren mit verringertem Fehler durch Regelung des ersten Analysewaveletsignal-Generators WG2 ausführt,
- Fig. 4: eine vereinfachte Prinzipskizze einer Vorrichtung, die das erfindungsgemäße Verfahren mit verringertem Fehler durch Regelung des Sendewaveletsignal-Generators WG1 ausführt,
- Fig. 5: die Prinzipskizze nach Fig. 1, jedoch um einen zweiten Wavelet-Analysesignalpfad ergänzt,
- Fig. 6: die Prinzipskizze nach Fig. 5, wobei nun zwei Waveletsignal-Generatoren geregelt werden,
- Fig. 7: die Prinzipskizze nach Fig. 5, wobei nun der Waveletsignal-Generator für den Sender und ein Waveletsignal-Generator für den Empfangspfads geregelt werden.
- Fig. 8: eine Grundkonfiguration der Erfindung,
- Fig. 9: die Erfindung unter Nutzung eines zweistufigen Delta-Sigma-Verfahrens,
- Fig. 10: eine besonders einfache Variante der erfindungsgemäßen Vorrichtung und
- Fig. 11: ein Zeitschema der Empfangsfenstersignale SF1 und SF2 sowie des ersten Signals s1.

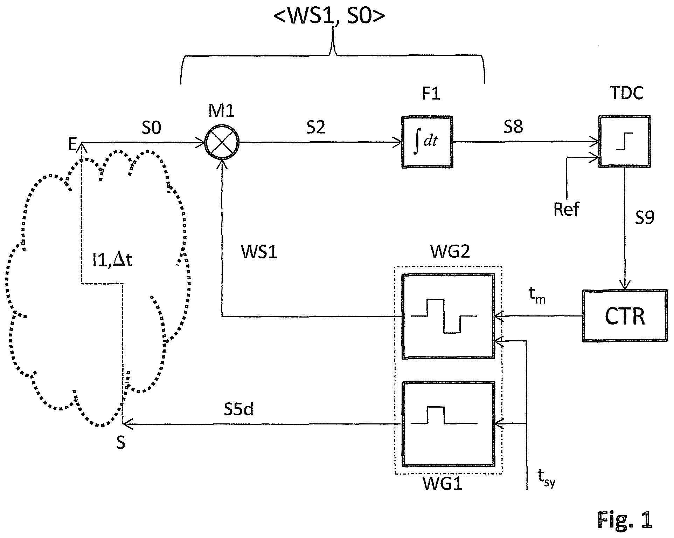

Fig. 1 zeigt die vereinfachte Prinzipskizze einer Vorrichtung, die das erfindungsgemäße Verfahren ausführt. Ein Sendewaveletsignal-Generator WG1 erzeugt das Sendewavelet-Signal S5d auf Basis eines ersten Wavelets WL1, das nicht eingezeichnet ist. Das Sendewavelet-Signal S5d wird durch einen Sender S in die Übertragungsstrecke I1 eingespeist. Dort erfährt es die Verzögerung Δt und erscheint am Ausgang, d.h. an einem Empfänger E der Übertragungsstrecke I1 als (verzögertes) Empfängerausgangssignal S0. Ein erster Analysewaveletsignal-Generator WG2 erzeugt ein erstes Analysewavelet-Signal WS1 auf Basis eines zweiten Wavelets WL2, das nicht eingezeichnet ist. Ein erster Multiplizierer M1 multipliziert das erste Analysewavelet-Signal WS1 mit dem Empfängerausgangssignal S0; das Ergebnis der Multiplikation ist das Filtereingangssignal S2. Ein erstes Filter F1 filtert das Filtereingangssignal S2 zum Skalar-Produktsignal S8. Das erste Filter ist bevorzugt ein Tiefpassfilter oder ein Integrator. Ein Zeit-zu-Digital-Wandler TDC, typischerweise ein Komparator, bildet das zeitkontinuierliche, wertdiskrete Bewertungssignal S9 durch Vergleich des Werts des Skalar-Produktsignals S8 mit einem ersten Referenzwert Ref und Wechsel des Wertes des zeitkontinuierlichen, wertdiskreten Bewertungssignals S9, wenn der Wert des Skalar-Produktsignals S8 den Referenzwert Ref zu einem Schneidezeitpunkt t₀+tₛ gegenüber dem ersten Bezugszeitpunkt t₀ schneidet. Ein Regler CTR steuert die Verzögerung tᵥ des zweiten Wavelets WL2 im ersten Analysewaveletsignal-Generator WG2 in Abhängigkeit von dem Zeitpunkt des Wechsels des Wertes des zeitkontinuierlichen, wertdiskreten Bewertungssignals S9 (in Fig. 1 ist mit tₘ die Verzögerung tᵥ gemeint).

Die beiden Wavelet-Generatoren WG1,WG2 werden in diesem Beispiel über ein Synchronisationssignal t_{sy} gestartet, das jeweils den Bezugszeitpunkt t₀ angibt.

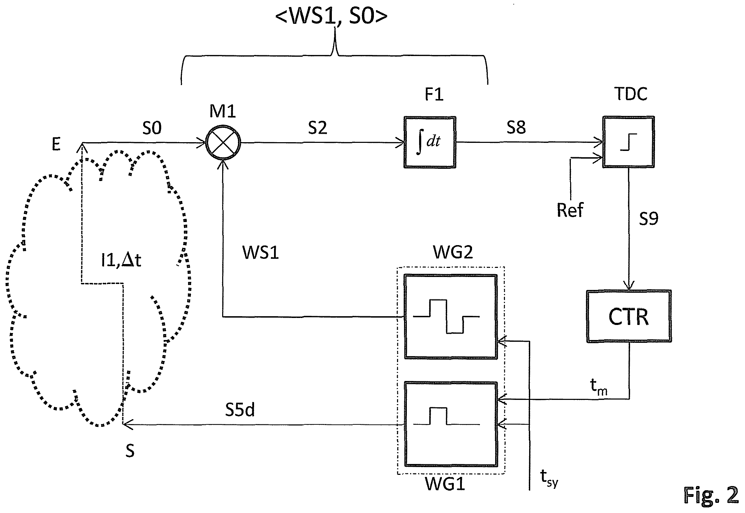

In Fig. 2 erfolgt die Regelung der Verzögerung im Sendewaveletsignal-Generator WG1.

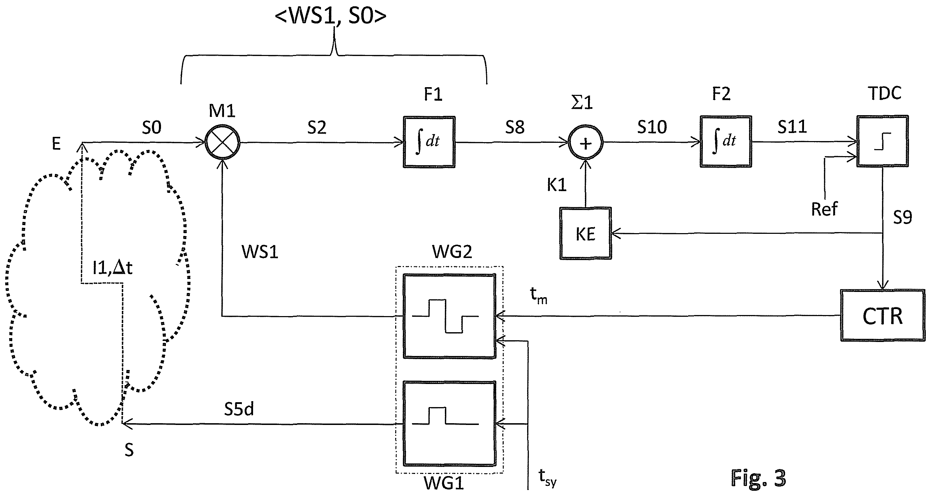

In Fig. 3 wandelt eine Korrektureinheit KE den Zeitpunkt des Wechsels des Wertes des zeitkontinuierlichen, wertdiskreten Bewertungssignals S9 in ein Korrektursignal K1. Ein erster Summierer Σ1 addiert das Skalar-Produktsignal S8 und das Korrektursignal K1 zu dem korrigierten Skalar-Produktsignal S10. Ein erstes Filter F1 filtert das korrigierte Skalar-Produktsignal S10 und erzeugt ein gefiltertes Skalar-Produktsignal S11. Das zweite Filter ist vorzugsweise ein Tiefpassfilter oder ein Integrator. Dieses bzw. dieser bildet nun anstelle des in Fig. 1 verwendeten Skalar-Produktsignals S8 das Eingangssignal für den Zeit-zu-Digital-Wandler TDC.

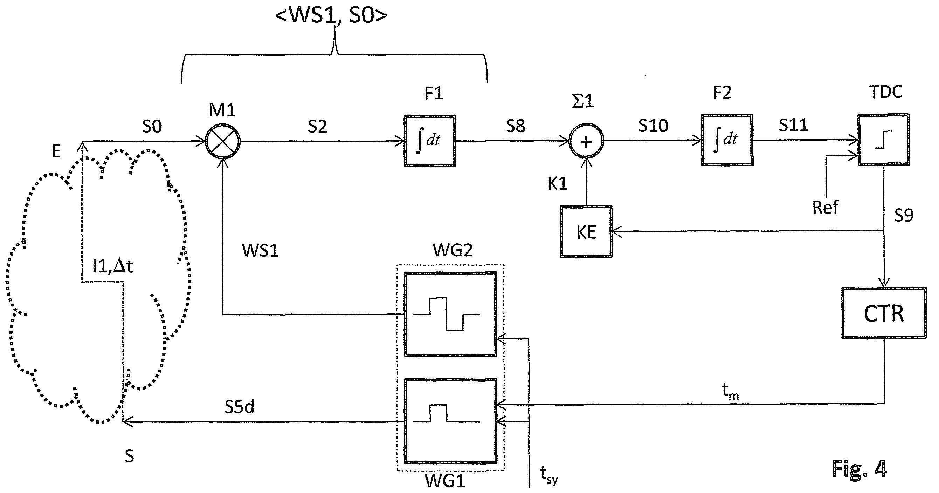

In Fig. 4 erfolgt bei einer Schaltung wie derjenigen nach Fig. 3 die Regelung der Verzögerung im Sendewaveletsignal-Generator WG1.

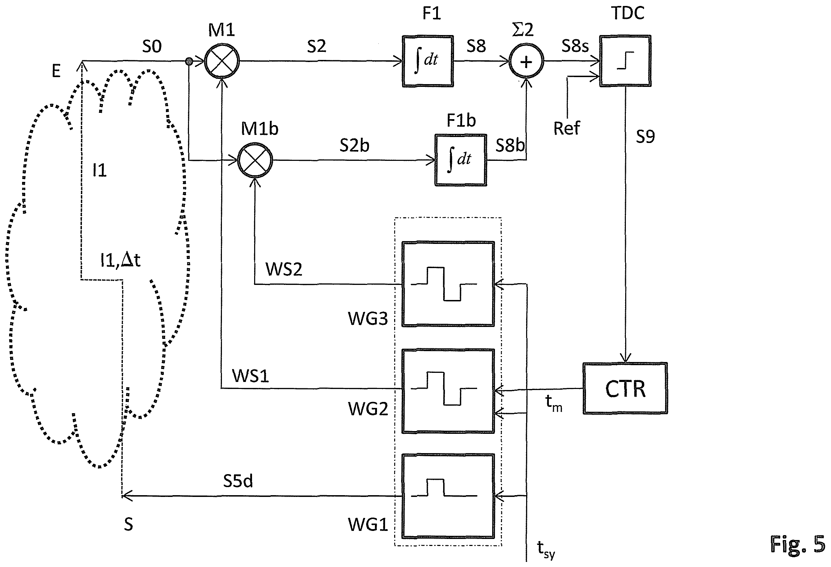

Fig. 5 entspricht der Fig. 1 mit dem Unterschied, dass ein zweiter Analysewaveletsignal-Generator WG3 mit Hilfe eines dritten Wavelets WL3 ein zweites Analysewavelet-Signal WS2 erzeugt. In dem Beispiel der Fig. 5 geschieht dies (ungeregelt) synchron zu den anderen Wavelet-Generatoren WG1,WG2. Dieses zweite Analysewavelet-Signal WS2 wird in einem zweiten Multiplizierer M1b wieder mit dem Empfängerausgangssignal S0 zu einem zweiten Filtereingangssignal S2b multipliziert. Ein weiteres erstes Filter F1b filtert das zweite Filtereingangssignal S2b; am Ausgang des weiteren ersten Filters F1b liegt ein (zweites) Skalar-Produktvorsignal S8b. Das Ausgangssignal des ersten Filters F1 ist entsprechend ein erstes Skalar-Produktvorsignal S8a. Dieses erste Skalar-Produktvorsignal S8a und das zweite Skalar-Produktvorsignal S8b werden durch den zweiten Summierer Σ2 gewichtet zum Skalar-Produktsignal S8 summiert. Der zweite Summierer Σ2 kann mit dem ersten Summierer Σ1 der Schaltungen der Fign. 3 und 4 identisch sein. Die hier beispielhafte Darstellung einer Realisierungsmöglichkeit kann mit den anderen, zuvor beschriebenen Realisierungsmöglichkeiten und anderen Realisierungsmöglichkeiten, die den Ansprüchen entsprechen, kombiniert werden.

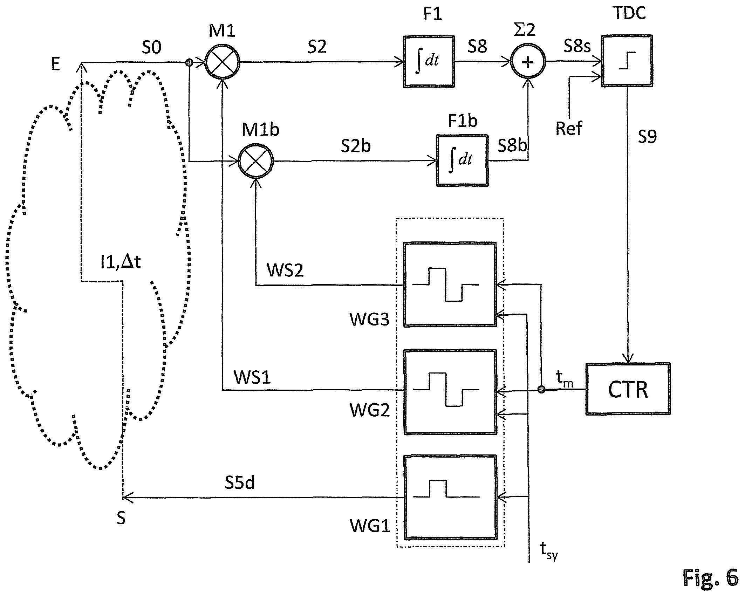

Fig. 6 entspricht der Fig. 5 mit dem Unterschied, dass nun die beiden Analysewaveletsignal-Generatoren WG2,WG3 geregelt werden. Die Regelung kann durch unterschiedliche Signale mit unterschiedlicher Empfindlichkeit der Wavelet-Generatoren gegenüber diesen Regelsignalen, also gewichtet, erfolgen. Auch ist es denkbar, dass die Regelung mit unterschiedlichen Zeitkonstanten erfolgt.

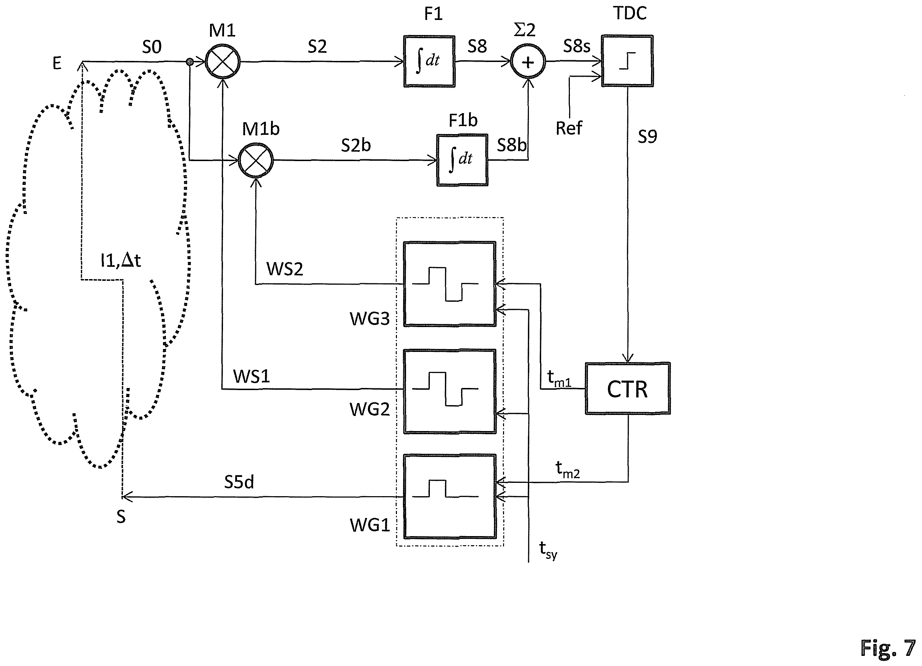

Fig. 7 entspricht der Fig. 5 mit dem Unterschied, dass nun der Sendewaveletsignal-Generator WG1 und der zweite Analysewaveletsignal-Generator WG3, der das zweite Analysewavelet-Signal WS2 erzeugt, geregelt werden. Die Regelung kann durch unterschiedliche Signale mit unterschiedlicher Empfindlichkeit der Wavelet-Generatoren gegenüber diesen Regelsignalen, also gewichtet, erfolgen. Auch ist es denkbar, dass die Regelung mit unterschiedlichen Zeitkonstanten erfolgt.

Die hier beschriebene Erfindung lässt sich z.B. bei der Lichtlaufzeitmessung einsetzen.

Die Messung der Lichtlaufzeit ist ein übliches Verfahren zur Distanzmessung mittels modulierter Lichtsignale. Bekannte Lösungen haben Limitierungen in der Fremdlichtunterdrückung, hohe Anforderungen an die analogen Komponenten und erfordern daher komplexe und kostenintensive Architekturen und verursachen eine hohe Stromaufnahme.

Aus dem Stand der Technik sind verschiedene Vorrichtungen zur Lichtintensitätsmessung und zur Lichtlaufzeitmessung bekannt. Hier sind beispielsweise zu nennen: DE-A-19 833 207, DE-B-10 2009 020 218, EP-B-1 678 523, DE-B-10 2011 076 635, DE-A-10 2012 206 089, DE-A-10 2009 037 596, DE-A-10 2008 018 718, WO-A-2007 031 102, EP-B-1 048 961, DE-A-10 138 531, DE-A-10 2007 046 562, DE-A-10 163 534, DE-A-10 221 578, US-A-2007 0 181 786, DE-A-10 2007 023 920 und WO-A-2013/083346.

Die dort offenbarten Technologien sind auch teilweise unter dem Namen HALIOS^{®}-TOF-Sensor-Technologie bekannt. Diese verfügt bereits über eine Nullregelung des Phasensignals.

Diese Lösung der HALIOS^{®}-TOF-Sensor-Technologie hat folgende Nachteile:
1) Die Auflösungserhöhung über die Diskretisierung des DACs DLL hinaus erfolgt nur über eine Mittelung nach der Diskretisierung nicht über eine Delta-Sigma-Regelschleife, weil die dafür bestimmende Information - der analoge Restfehler nach der Diskretisierung - gelöscht wird;
2) Die Regelschleife regelt nur über den bereits diskretisierten (digitalen) Fehler, so dass die Regelung nur mit einem Mindestrauschen funktioniert;
3) Die Verfahren erfordern ein hohe Schaltungskomplexität der entsprechenden Vorrichtungen;
4) Es bestehen extreme Anforderungen an die Amplitudenregelung;
5) Es tritt ein hoher Stromverbrauch auf;
6) Es entstehen starke Lastwechsel;
7) Es entstehen hohe Stromspitzen im Falle eines Burst-Betriebs;
8) Es besteht die Notwendigkeit einer optisch komplex angekoppelten Kompensator LED;
9) Ein Parallelbetrieb mehrerer Fotodioden ist nicht möglich.

Die dermaßen definierte Systemperformance ist dementsprechend für viele kommerzielle Anwendungen nicht ausreichend. Daraus folgt eine zu hohe Systemkomplexität, die wiederum eine zu große Chipfläche im Falle monolithisch integrierter Schaltungen und damit eine zu hohe Stromaufnahme zur Folge hat. Außerdem sind diese Techniken nicht ausreichend skalierbar, sodass nicht mehrere TOF Kanäle ohne weiteres mit einem einzigen Sendekanal parallel betrieben werden können.

Zur Verbesserung des Stands der Technik wird erfindungsgemäß die Nullregelung der Phase zu einem Delta-Sigma-Verfahren modifiziert. Dies wird durch folgende technische Maßnahmen erreicht:
1. Das Zurücksetzen des Integrators nach jedem Integrationszeitfenster, wie heute bekannt, wird eliminiert.
2. Die Differenz der Integrale auf steigender und fallender Flanke des Senderpulses wird schon im Speicherelement des Integrators gebildet. Hierzu benötigt man einen Mechanismus der die Integration mit wählbarem Vorzeichen ermöglicht.
3. Die Rückkoppelung vom Diskretisierer zum DAC erfolgt unmittelbar zu dem nächsten Mess-Puls.
4. Der Tiefpass, welcher das Ergebnis ermittelt, wird außerhalb der Regelschleife realisiert.

Ein weiterer unabhängiger Punkt ist die Nullregelung der Phase durch Verschieben des Integrationsfensters statt des zeitlichen Verschiebens des Sendesignals. Dadurch wird eine Skalierbarkeit erreicht. Das heißt, mehrere Sensorkanäle können bei einem LED Signal gleichzeitig einer Nullregelung unterzogen werden.

Die Erfindung betrifft somit in ihrer Anwendung auf die Lichtlaufzeitmessung eine Vorrichtung zur Laufzeitbestimmung in einer ersten Übertragungsstrecke I1 zwischen einem Sender H und einem ersten Empfänger D1. Um den Sender H zu speisen wird entweder mittels einer Verzögerungseinheit ΔT aus einem Sendesignal S5 zumindest zeitweise ein um eine Verzögerungszeit Δt Sendewavelet-Signal S5d gebildet oder man verwendet gleich das Sendesignal S5 als Sendewavelet-Signal S5d, das im Sinne dieser Offenbarung stets den Sender H speist. Der Sender H sendet nun in Abhängigkeit von dem besagten Sendewavelet-Signal S5d ein erstes, insbesondere optisches, Signal s1 zeitabschnittsweise bezogen auf einen Zeitabschnitt T_{z} in die erste Übertragungsstrecke I1 hin. Das erste Signal s1 weist dabei mindestens ein Trägersignal als Signalkomponente auf, das zumindest mit einem Modulationssignal in der Amplitude und/oder Phase und/oder Polarisation und/oder Wellenlänge und/oder Amplitudenmodulationsfrequenz und/oder der spektralen Zusammensetzung moduliert ist. Beispielsweise handelt es sich um ein Licht-Signal, das von einer LED Amplitudenmoduliert mit einer Modulationsfrequenz und einer vorgegebenen optischen Wellenlänge ausgesendet wird. Ganz besonders bevorzugt handelt es sich um eine gepulst betriebene Laser-Diode. In jedem Zeitabschnitt T_{z}, in dem der Sender H das erste Signal s1 sendet, weist das erste Signal s1 innerhalb dieses betreffenden Zeitabschnitts T_{z} einen ersten zeitlichen Beginn tₛ₁ und ein erstes zeitliches Ende tₑ₁ auf. Im Sinne eines Pulsbetriebes ist dabei unter dem ersten zeitlichen Beginn tₛ₁ der Beginn des Pulses und unter dem ersten zeitlichen Ende tₑ₁ das Ende des Sendepulses zu verstehen. Die Zeitanschnitte T_{z} sind vorzugsweise aber nicht notwendigerweise zeitlich gleich lang. Jeder Zeitanschnitt T_{z} besitzt einen zeitlichen Beginn t_{sz} des Zeitabschnitts T_{z} und ein zeitliches Ende t_{ez} des Zeitabschnitts T_{z}. Auch sind der erste zeitliche Beginn tₛ₁ und das erste zeitliche Ende tₑ₁ des ersten Signals s1 von Zeitabschnitt zu Zeitabschnitt vorzugsweise aber nicht notwendigerweise gleich. Im Folgenden betrachten wir nur einen einzelnen Zeitabschnitt T_{z}, wobei die vorausgehenden Zeitabschnitte T_{z} und die folgenden Zeitabschnitte T_{z} sich jeweils ähnlich verhalten. Die Zeitabschnitte T_{z} überlappen sich dabei vorzugsweise nicht und folgen einander nicht unbedingt direkt. Vielmehr ist es denkbar, dass Zeitabschnitte voneinander durch größere zeitliche Abstände getrennt sind.

Die erste Übertragungsstrecke I1 enthält vorzugsweise ein Objekt O, dessen Abstand durch die Laufzeitmessung ermittelt werden soll. Selbstverständlich kann auch die Laufzeit in der ersten Übertragungstrecke I1 selbst ermittelt werden, um beispielsweise den Brechungsindex in der Übertragungsstrecke zu ermitteln. Die die erste Übertragungsstrecke I1 modifiziert somit das erste Signal s1 beim Durchgang durch diese erste Übertragungsstrecke I1 zu einem zweiten, insbesondere optischen, Signal s2. Wir fassen hier also das Objekt O als Teil der ersten Übertragungsstrecke I1 auf. Diese Modifikation kann die Amplitude und/oder die Phase und/oder die Polarisation und/oder die Wellenlänge und/oder die Amplitudenmodulationsfrequenz und/oder die spektrale Zusammensetzung des zweiten Signals s2 im Vergleich zum ersten Signal s1 betreffen, wobei die Änderung der Phase einer Verzögerung durch die Laufzeit entspricht. Nachdem das erste Signal s1 die erste Übertragungsstrecke I1 durchlaufen hat und zum zweiten Signal s2 dabei modifiziert wurde, empfängt der erste Empfänger D1 das zweite Signal s2 nach Austritt aus der ersten Übertragungsstrecke I1 innerhalb dieses betreffenden Zeitabschnitts T_{z}. In dem ersten Empfänger D1 wird das zweite Signal s2 in ein Empfängerausgangssignal S0 durch diesen gewandelt. Ein erster Multiplizierer M1 multipliziert innerhalb dieses betreffenden Zeitabschnitts T_{z} das Empfängerausgangssignal S0 mit einem ersten Empfangsfenstersignal SF1 zu einem ersten internen Signal S2a. Das erste Empfangsfenstersignal SF1 weist innerhalb des besagten betreffenden Zeitabschnittes T_{z} einen zweiten zeitlichen Beginn tₛ₂ auf, der zeitlich vor dem ersten zeitlichen Beginn tₛ₁ des ersten Signals s1 und zeitlich vor dem zeitlichen Ende tₑ₁ des ersten Signals s1 liegt. Auf der anderen Seite weist das erste Empfangsfenstersignal SF1 innerhalb des besagten betreffenden Zeitabschnittes T_{z} ein zweites zeitliches Ende tₑ₂ auf, das zeitlich nach dem ersten zeitlichen Beginn tₛ₁ des ersten Signals s1 und zeitlich vor dem zeitlichen Ende tₑ₁ des ersten Signals s1 liegt.

Das erste Empfangsfenster, das durch das erste Empfangsfenstersignal SF1 definiert wird, liegt also so, dass es sich mit dem Sendepuls des ersten Signals s1 so überlappt, dass der Sendepuls in dem ersten Empfangsfenster beginnt und das erste Empfangsfenster endet, bevor der Sendepuls endet.

Ein zweiter Multiplizierer M2 multipliziert innerhalb dieses betreffenden Zeitabschnitts T_{z} das Empfängerausgangssignal S0 mit einem zweiten Empfangsfenstersignal SF2 zu einem zweiten internen Signal S2b. Das zweite Empfangsfenstersignal SF2 weist innerhalb des besagten betreffenden Zeitabschnittes T_{z} einen dritten zeitlichen Beginn tₛ₃ aufweist, der zeitlich nach dem ersten zeitlichen Beginn tₛ₁ des ersten Signals s1 und zeitlich vor dem zeitlichen Ende tₑ₁ des ersten Signals s1 liegt. Das zweite Empfangsfenstersignal SF2 weist innerhalb des besagten betreffenden Zeitabschnittes T_{z} ein drittes zeitliches Ende tₑ₃ auf, das zeitlich nach dem ersten zeitlichen Beginn tₛ₁ des ersten Signals s1und zeitlich nach dem zeitlichen Ende tₑ₁ des ersten Signals s1 liegt.

Das zweite Empfangsfenster, das durch das zweite Empfangsfenstersignal SF2 definiert wird, liegt also so, dass es sich mit dem Sendepuls des ersten Signals s1 so überlappt, dass der Sendepuls in dem zweiten Empfangsfenster aufhört und das zweite Empfangsfenster nach dem Sendepuls endet.

Die beiden so gebildeten Signale werden nun weiter verarbeitet. Ein erster Filter F1 bildet nun innerhalb dieses betreffenden Zeitabschnitts T_{z} die Differenz aus dem zuvor gebildeten ersten internen Signal S2a und dem zweiten internen Signal S2b. Das Ergebnis der Filterung durch den ersten Filter F1 ist ein erstes Filterausgangssignal S8. Ganz bevorzugt ist eine Integration und/oder Tiefpassfilterung durch den ersten Filter F1.

In einer ersten Variante hängt der zweite zeitliche Beginn tₛ₂ des ersten Empfangsfenstersignals SF1 von dem ersten Filterausgangssignal S8 ab.

In einer zweiten Variante hängt das zweite zeitliche Ende tₑ₂ des ersten Empfangsfenstersignals SF1 von dem ersten Filterausgangssignal S8 ab.

In einer dritten Variante hängt der dritte zeitliche Beginn tₛ₃ des zweiten Empfangsfenstersignals SF2 von dem ersten Filterausgangssignal S8 ab.

In einer vierten Variante hängt das dritte zeitliche Ende tₑ₃ des zweiten Empfangsfenstersignals SF2 von dem ersten Filterausgangssignal S8 ab.

In einer fünften Variante hängt die Verzögerungszeit Δt von dem ersten Filterausgangssignal S8 ab.

Das erste Filterausgangssignal S8 kann bereits als Messwertsignal für eine Laufzeit des ersten Signals s1 in der Übertragungsstrecke I1 verwendet werden. Es hat sich jedoch gezeigt, dass es günstig ist, ein nachfolgendes zweites Filter F2, insbesondere ein Tiefpassfilter vorzusehen, dass das eigentliche erste Ausgangssignal S4 als Messwert für die Laufzeitbestimmung des ersten Signals s1 und/des zweiten Signals s2 in Summe in der ersten Übertragungsstrecke I1 dient.

In einer weiteren Ausprägung der Erfindung integriert der erste Filter F1 die Differenz aus dem ersten internen Signal S2a und dem zweiten internen Signal S2b zu einem ersten Filterausgangssignal S8.

In einer dritten Ausprägung der Erfindung ist das erste Empfangsfenstersignal SF1 vom zeitlichen Beginn t_{sz} des betreffenden Zeitabschnittes T_{z} bis zum zweiten zeitlichen Beginn tₛ₂ des ersten Empfangsfenstersignals SF1 betragsmäßig Null. Das erste Empfangsfenstersignal SF1 steigt in seinem Betrag in dieser Ausprägung vom zweiten zeitlichen Beginn tₛ₂ des ersten Empfangsfenstersignals SF1 zeitlich monoton steigend oder sprunghaft an. Dabei ist ein langsamer Anstieg des Betrags des ersten Empfangsfenstersignals SF1 gegenüber dem sprunghaften Anstieg zur Verminderung der Jitter-Empfindlichkeit des Systems zu bevorzugen. Es ist daher sinnvoll, wenn die Anstiegszeit länger als 1% der im Folgenden erläuterten ersten Mindestkonstanzzeit tₖ₁ ist und/oder mindestens 1% der zeitlichen Länge des Zeitabschnitts T_{z} ist. Für eine erste Mindestkonstanzzeit tₖ₁ bis zum zweiten zeitlichen Ende tₛ₂ des ersten Empfangsfenstersignals SF1 bleibt der Betrag des ersten Empfangsfenstersignals SF1 auf einem kontanten Wert. Dabei bedeutet Konstanz im Sinne dieser Offenbarung eine Änderung der Amplitude des ersten Empfangsfenstersignals SF1 um weniger als 25%. Das erste Empfangsfenstersignal SF1 fällt betragsmäßig vom zum zweiten zeitlichen Ende tₑ₂ des ersten Empfangsfenstersignals SF1 zeitlich monoton fallend oder sprunghaft ab und bleibt dann betragsmäßig bis zum zeitlichen Ende t_{ez} des betreffenden Zeitabschnittes T_{z} Null.

In einer vierten Ausprägung der Erfindung ist nun analog zur vorhergehenden Ausprägung das zweite Empfangsfenstersignal SF2 betragsmäßig vom zeitlichen Beginn t_{sz} des betreffenden Zeitabschnittes T_{z} bis zum dritten zeitlichen Beginn tₛ₃ des zweiten Empfangsfenstersignals SF2 Null. Das zweite Empfangsfenstersignal SF2 steigt betragsmäßig vom dritten zeitlichen Beginn tₛ₃ des zweiten Empfangsfenstersignals SF2 zeitlich monoton oder sprunghaft an und bleibt betragsmäßig für eine zweite Mindestkonstanzzeit tₖ₂ bis dritten zeitlichen Ende tₑ₃ des zweiten Empfangsfenstersignals SF2 auf einem kontanten Wert. Hinsichtlich der Konstanz gilt das zuvor Geschriebene. Das zweite Empfangsfenstersignal SF2 fällt betragsmäßig vom zum dritten zeitlichen Ende tₑ₃ des zweiten Empfangsfenstersignals SF2 zeitlich monoton oder sprunghaft ab und bleit dann betragsmäßig bis zum zeitlichen Ende t_{ez} des betreffenden Zeitabschnittes T_{z} Null.

In einer fünften Ausprägung der Erfindung ist die erste Mindestkonstanzzeit tₖ₁ gleich der zweiten Mindestkonstanzzeit tₖ₂, was eine bevorzugte Ausprägung der vierten Ausprägung ist.

In einer sechsten Ausprägung ist die erste Mindestkonstanzzeit tₖ₁ und/oder die zweite Mindestkonstanzzeit tₖ₂ größer ist als die zeitliche Auflösung mit der
- der zweite zeitliche Beginn tₛ₂ des ersten Empfangsfenstersignals SF1 und/oder
- das zweite zeitliche Ende tₑ₂ des ersten Empfangsfenstersignals SF1 und/oder
- der dritte zeitliche Beginn tₛ₃ des zweiten Empfangsfenstersignals SF2 und/oder
- das dritte zeitliche Ende tₑ₃ des zweiten Empfangsfenstersignals SF2 und/oder
- die Verzögerungszeit Δt
von dem ersten Filterausgangssignal S8 und/oder einem später beschriebenen ersten digitalisierten Filterausgangssignal S9 abhängen.

In einer siebten Ausprägung ist die erste Mindestkonstanzzeit tₖ₁ und/oder die zweite Mindestkonstanzzeit tₖ₂ größer ist als die zeitliche Summe aus der zeitlichen Auflösung, mit der
- der zweite zeitliche Beginn tₛ₂ des ersten Empfangsfenstersignals SF1 und/oder
- das zweite zeitliche Ende tₑ₂ des ersten Empfangsfenstersignals SF1 und/oder
- der dritte zeitliche Beginn tₛ₃ des zweiten Empfangsfenstersignals SF2 und/oder
- das dritte zeitliche Ende tₑ₃ des zweiten Empfangsfenstersignals SF2 und/oder
- die Verzögerungszeit Δt
von dem ersten Filterausgangssignal S8 und/oder einem ersten digitalisierten Filterausgangssignal S9 plus der Anstiegszeit tₐ, mit der der Sender H zu senden beginnt, plus der Abfallszeit t_{f}, mit der der Sender H zu senden aufhört, abhängt.

In einer achten Ausprägung der Erfindung ist das erste Filter F1 ein lineares Filter mit einer Filterfunktion f(ΔS2). Hier ist ΔS2 das Differenzsignal aus dem ersten internen Signal S2a und dem zweiten internen Signal 22b. Die Filterfunktion f() kann aber zunächst ganz allgemein gesehen werden und als Merkmal des Filters an sich betrachtet werden. Dieses rein mathematische Merkmal, dass in der technischen Realisierung des Filters seinen Niederschlag findet, kann auch auf einzelne Signale angewendet werden, um diese Signal zu charakterisieren.

In einer neunten Ausprägung der Erfindung ist die Betragsänderung einer vom zweiten Empfangsfenstersignal SF2 abhängigen Filterfunktion f() entsprechend dem Vorgesagten vom zeitlichen Beginn t_{sz} des betreffenden Zeitabschnittes T_{z} bis zum zeitlichen Ende t_{ez} des betreffenden Zeitabschnittes T_{z} gleich der Betragsänderung der vom ersten Empfangsfenstersignal SF1 abhängigen Filterfunktion f() entsprechend dem Vorgesagten vom zeitlichen Beginn t_{sz} des betreffenden Zeitabschnittes bis zum zeitlichen Ende t_{ez} des betreffenden Zeitabschnittes T_{z}. Das bedeutet nichts anderes, als dass sich das ersten Empfangsfenstersignal SF1 und das zweite Empfangsfenstersignal SF2 bei Filterung durch das erste Filter F1 gleich verhalten sollten. Da das erste Filter F1 linear ist, führt eine Subtraktion der Empfangsfenstersignale somit zu einem verschwindenden ersten Filterausgangssignal F8.

In einer zehnten Ausprägung der Erfindung ist das zeitliche Integral des zweiten Empfangsfenstersignals SF2 vom zeitlichen Beginn t_{sz} des betreffenden Zeitabschnittes T_{z} bis zum zeitlichen Ende t_{ez} des betreffenden Zeitabschnittes T_{z} gleich dem Integral des ersten Empfangsfenstersignals SF1 vom zeitlichen Beginn t_{sz} des betreffenden Zeitabschnittes T_{z} bis zum zeitlichen Ende t_{ez} des betreffenden Zeitabschnittes T_{z}. Wie zuvor erwähnt ist die Integration ja eine spezielle mögliche Form des ersten Filters F1. Die zehnte Ausprägung der Erfindung ist somit nur eine Spezialform der neunten Ausprägung mit einem ersten Filter F1 in Form eines Integrators.

In einer elften Ausprägung der Erfindung wird das erste Filterausgangssignal S8 durch einen Analog-zu-Digital-Wandler ADC und/oder einen Zeit-zu-Digital-Wandler TDC in ein wertdiskretes erstes digitalisiertes Filterausgangssignal S9 gewandelt. Dabei ist einem Zeit-zu-Digital-Wandler TDC stets der Vorzug zu geben, weil dieser eine erhöhte Auflösung ermöglicht. Dabei hängt dann zumindest
- der zweite zeitliche Beginn tₛ₂ des ersten Empfangsfenstersignals SF1 und/oder
- das zweite zeitliche Ende tₑ₂ des ersten Empfangsfenstersignals SF1 und/oder
- der dritte zeitliche Beginn tₛ₃ des zweiten Empfangsfenstersignals SF2 und/oder
- das dritte zeitliche Ende tₑ₃ des zweiten Empfangsfenstersignals SF2 und/oder
- die Verzögerungszeit Δt
von dem ersten digitalisierten Filterausgangssignal S9 statt von dem ersten Filterausgangssignal S8 ab. Das erste Filterausgangssignal S8 und/oder das erste digitalisierte Filterausgangssignal S9 und/oder ein oder mehrere aus diesen, insbesondere durch einen oder mehrere nachfolgende zweite Filter F2, abgeleitete erste Ausgangssignale S4 werden wieder innerhalb dieses betreffenden Zeitabschnitts T_{z} als Messwert für die Laufzeitbestimmung des ersten Signals s1 in der Übertragungsstrecke I1 verwendet.

Die zwölfte Ausprägung der Erfindung betrifft ein zweistufiges Delta-Sigma-System. Hierzu summiert ein erster Summierer Σ1 das Filterausgangssignal S8 und ein erstes Korrektursignal SK1 zu einem zweiten Filtereingangssignal S10. Ein drittes lineares Filter F3 mit einer Filterfunktion f₃(S10) filtert das zweite Filtereingangssignal S10 zu einem dritten Filterausgangssignal S11. Das dritte Filterausgangssignal S11 wird nun anstelle des ersten Filterausgangssignals S8 durch einen Analog-zu-Digital-Wandler ADC oder einen Zeit-zu-Digital-Wandler TDC in das wertdiskrete erste digitalisierte Filterausgangssignal S9 gewandelt. Auch hier ist der Variante mit dem Zeit-zu-Digital-Wandler TDC der Vorzug zu geben. Eine Korrektursignalerzeugungseinheit KE, die vorzugsweise das digitalisierte Filterausgangssignal S9 in eine Ladungsmenge für das dritte Filter F3, das vorzugsweise ein weiterer Integrator ist, umsetzt, erzeugt nun das erste Korrektursignal SK1, das vorzugsweise ein Ladungssignal ist, in Abhängigkeit von dem digitalisierten Filterausgangssignal S9.

Diese Konstruktion einer zweiten Integrationsschleife hat den Vorzug, dass das Rauschen und die Regelfehler minimiert werden.

In einer dreizehnten Ausprägung der Erfindung erzeugt ein Regler CTR in Abhängigkeit von dem Filterausgangssignal S8 und/oder dem digitalisierten Filterausgangssignal S9 und/oder dem dritten Filterausgangssignal S11 und ggf. einem Vorgabewert Ref ein erstes Reglerausgangssignal S12. Zumindest
- der zweite zeitliche Beginn tₛ₂ des ersten Empfangsfenstersignals SF1 und/oder
- das zweite zeitliche Ende tₑ₂ des ersten Empfangsfenstersignals SF1 und/oder
- der dritte zeitliche Beginn tₛ₃ des zweiten Empfangsfenstersignals SF2 und/oder
- das dritte zeitliche Ende tₑ₃ des zweiten Empfangsfenstersignals SF2 und/oder
- die Verzögerungszeit Δt
hängen in dieser dreizehnten Ausprägung der Erfindung von dem ersten Reglerausgangssignal S12 statt von dem ersten digitalisierten Filterausgangssignal S9 oder dem ersten Filterausgangssignal S8 ab.

In einer vierzehnten Ausprägung der Erfindung ist der Regler CTR ein PID Regler.

In einer fünfzehnten Ausprägung der Erfindung weist der Regler CTR oder eine Teilvorrichtung des Reglers CTR eine Hysterese auf. Dies hat den Vorteil, dass das System störunempfindlicher wird.

In einer sechzehnten Ausprägung der Erfindung weist die Vorrichtung einen Temperatursensor TS zur Erfassung der Temperatur T des Senders H oder einer damit im Wirkzusammenhang stehenden Temperatur in Form eines Temperatursensorsignals TSS auf. Zumindest
- der zweite zeitliche Beginn tₛ₂ des ersten Empfangsfenstersignals SF1 und/oder
- das zweite zeitliche Ende tₑ₂ des ersten Empfangsfenstersignals SF1 und/oder
- der dritte zeitliche Beginn tₛ₃ des zweiten Empfangsfenstersignals SF2 und/oder
- das dritte zeitliche Ende tₑ₃ des zweiten Empfangsfenstersignals SF2 und/oder
- die Verzögerungszeit Δt
hängen von dem Temperatursensorsignal TSS zumindest zeitweise innerhalb des betreffenden Zeitabschnitts T_{z} ab.

In einer siebzehnten Ausprägung der Erfindung wird der elektrische Sendestrom I_{H}, den der Sender H aufnimmt, ausgewertet und für eine Sender-Temperaturabschätzung genutzt. Daher weist die Vorrichtung in dieser Variante eine Sendestromerfassungsvorrichtung I_{HM} auf, die ein Sendestrommesssignal I_{MS} liefert. In diesem Fall hängt bevorzugt zumindest
- der zweite zeitliche Beginn tₛ₂ des ersten Empfangsfenstersignals SF1 und/oder
- das zweite zeitliche Ende tₑ₂ des ersten Empfangsfenstersignals SF1 und/oder
- der dritte zeitliche Beginn tₛ₃ des zweiten Empfangsfenstersignals SF2 und/oder
- das dritte zeitliche Ende tₑ₃ des zweiten Empfangsfenstersignals SF2 und/oder
- die Verzögerungszeit Δt
von dem Sendestrommesssignal I_{MS} zumindest zeitweise ab.

Es hat sich gezeigt, dass es sinnvoll und günstig ist, die zeitlichen Parameter der Empfangsfenstersignals SF1,SF2 nicht unabhängig voneinander zu verändern.

In einer achtzehnten Ausprägung der Erfindung ist daher entweder der zweite zeitliche Beginn tₛ₂ des ersten Empfangsfenstersignals SF1 gleich dem zweiten zeitlichen Ende tₑ₂ des ersten Empfangsfenstersignals SF1 und der dritte zeitliche Beginn tₛ₃ des zweiten Empfangsfenstersignals SF2 liegt nach dem dritten zeitlichen Ende tₑ₃ des zweiten Empfangsfenstersignals SF2 oder der zweite zeitliche Beginn tₛ₂ des ersten Empfangsfenstersignals SF1 liegt nach dem zweiten zeitlichen Ende tₑ₂ des ersten Empfangsfenstersignals SF1 und der dritte zeitliche Beginn tₛ₃ des zweiten Empfangsfenstersignals SF2 ist gleich dem dritten zeitlichen Ende tₑ₃ des zweiten Empfangsfenstersignals SF2.

In einer neunzehnten Ausprägung der Erfindung hängt der zweite zeitliche Beginn tₛ₂ des ersten Empfangsfenstersignals SF1 und der dritte zeitliche Beginn tₑ₃ des zweiten Empfangsfenstersignals SF2 in gleicher Weise von dem ersten Filterausgangssignal S8 und/oder dem ersten digitalisierten Filterausgangssignal S9 und/oder dem dritten Filterausgangssignal S11 und/oder dem ersten Reglerausgangssignal S12 ab. Hierbei bedeutet Gleichheit, dass sich die entsprechenden Ableitungen dieser Zeitpunkte nach den Pegeln dieser Signale hinsichtlich des Vorzeichens nicht unterscheiden und betragsmäßig um nicht mehr als 25% unterscheiden.

In einer zwanzigsten Ausprägung der Erfindung hängt der der zweite zeitliche Beginn tₛ₂ des ersten Empfangsfenstersignals SF1 und das dritte zeitliche Ende tₑ₃ des zweiten Empfangsfenstersignals SF2 in gleicher Weise von dem ersten Filterausgangssignal S8 und/oder dem ersten digitalisierten Filterausgangssignal S9 und/oder dem dritten Filterausgangssignal S11 und/oder dem ersten Reglerausgangssignal S12 ab. Auch hierbei bedeutet Gleichheit, dass sich die entsprechenden Ableitungen dieser Zeitpunkte nach den Pegeln dieser Signale hinsichtlich des Vorzeichens nicht unterscheiden und betragsmäßig um nicht mehr als 25% unterscheiden.

In einer einundzwanzigsten Ausprägung der Erfindung hängt das zweite zeitliche Ende tₑ₂ des ersten Empfangsfenstersignals SF1 und das dritte zeitliche Ende tₑ₃ des zweiten Empfangsfenstersignals SF2 in gleicher Weise von dem ersten Filterausgangssignal S8 und/oder dem ersten digitalisierten Filterausgangssignal S9 und/oder dem dritten Filterausgangssignal S11 und/oder dem ersten Reglerausgangssignal S12 ab. Auch hierbei bedeutet Gleichheit, dass sich die entsprechenden Ableitungen dieser Zeitpunkte nach den Pegeln dieser Signale hinsichtlich des Vorzeichens nicht unterscheiden und betragsmäßig um nicht mehr als 25% unterscheiden.

In einer zweiundzwanzigsten Ausprägung der Erfindung hängt das zweite zeitliche Ende tₑ₂ des ersten Empfangsfenstersignals SF1 und der dritte zeitliche Beginn tₛ₃ des zweiten Empfangsfenstersignals SF2 in gleicher Weise von dem ersten Filterausgangssignal S8 und/oder dem ersten digitalisierten Filterausgangssignal S9 und/oder dem dritten Filterausgangssignal S11 und/oder dem ersten Reglerausgangssignal S12 ab. Auch hierbei bedeutet Gleichheit, dass sich die entsprechenden Ableitungen dieser Zeitpunkte nach den Pegeln dieser Signale hinsichtlich des Vorzeichens nicht unterscheiden und betragsmäßig um nicht mehr als 25% unterscheiden.

Neben diesen Varianten ist eine Variante von besonderem Interesse. Hierbei verfügt das System über mehrere Empfänger, einen ersten Empfänger D1 und einen zweiten Empfänger D2 der Regelkreis bezieht sich dann vorzugsweise nur auf die zeitlichen Parameter der entsprechenden Empfangsfenstersignale. Aus den Empfängerausgangssignalen S0,S0B kann natürlich ein Regelsignal für die zeitliche Verzögerung des Sendesignals S5 zum Sendewavelet-Signal S5d synthetisiert werden. Am einfachsten ist es aber, wenn dann diese Verzögerung einem Empfänger zugeordnet wird oder einem Summensignal der jeweiligen Filterausgangssignale S8,S8d etc. zugeordnet wird.

Eine dreiundzwanzigste Ausprägung der Erfindung dient daher zur parallelen Bestimmung der Laufzeit in einer zweiten Übertragungsstrecke I2, die ganz oder teilweise mit der ersten Übertragungsstrecke I1 übereinstimmen kann und das Objekt O und /oder ein weiteres Objekt O2 enthalten kann, zwischen dem Sender H und mindestens einem weiteren Empfänger D2. Der Sender H sendet nun in Abhängigkeit von dem Sendewavelet-Signal S5d ein drittes, insbesondere optisches, Signal s3 zeitabschnittsweise in die zweite Übertragungsstrecke I2 hinein.

Typischerweise wird diese Konfiguration so aussehen, dass der Sender ein optisches Signal aussendet, wobei ein erster Teil dieses optischen Signals in die erste übertragungsstrecke i1 gelangt und das erste Signal s1 bildet und ein zweiter Teil in die zweite Übertragungsstrecke I2 gelangt und das dritte Signal s3 bildet. Somit sind typischerweise das erste Signal s1 und das zweite Signal s2 synchron. Daher ist auch das dritte Signal s3 mit einem Trägersignal als Signalkomponente versehen. Dieses Trägersignal, ist somit zumindest mit einem Modulationssignal in der Amplitude und/oder Phase und/oder Polarisation und/oder Wellenlänge und/oder Amplitudenmodulationsfrequenz und/oder der spektralen Zusammensetzung moduliert. In jedem Zeitabschnitt T_{z}, in dem der Sender H das dritte Signal s3 sendet, weist das dritte Signal s3 innerhalb dieses betreffenden Zeitabschnitts T_{z} einen vierten zeitlichen Beginn tₛ₄ und ein viertes zeitliches Ende tₑ₄ auf. Die zweite Übertragungsstrecke I2 modifiziert das dritte Signal s3 beim Durchgang durch diese zweite Übertragungsstrecke I2 zu einem vierten, insbesondere optischen, Signal s4. Wieder kann diese Modifikation die Amplitude und/oder die Phase und/oder die Polarisation und/oder die Wellenlänge und/oder die Amplitudenmodulationsfrequenz und/oder die spektrale Zusammensetzung des fünften Signals im Vergleich zum vierten Signal betreffen, wobei die Phasenveränderung wieder der Verzögerung in Folge der Laufzeit entspricht. Der weitere Empfänger D2 empfängt das vierte Signal s4 nach Austritt aus der zweiten Übertragungsstrecke I2. In dem weiteren Empfänger D2 wandelt der weitere Empfänger D2 das vierte Signal s4 in ein weiteres Empfängerausgangssignal S0B. Ein dritter Multiplizierer M3 multipliziert das weitere Empfängerausgangssignal S0B mit einem dritten Empfangsfenstersignal SF3 zu einem dritten internen Signal S2Ba. Das dritte Empfangsfenstersignal SF3 weist innerhalb des besagten betreffenden Zeitabschnittes T_{z} einen fünften zeitlichen Beginn tₛ₅ auf, der zeitlich vor dem vierten zeitlichen Beginn tₛ₄ des dritten Signals s4 und zeitlich vor dem vierten zeitlichen Ende tₑ₄ des vierten Signals s4 liegt. Das dritte Empfangsfenstersignal SF3 weist innerhalb des besagten betreffenden Zeitabschnittes T_{z} ein fünftes zeitliches Ende tₑ₅ auf, das zeitlich nach dem vierten zeitlichen Beginn tₛ₄ des vierten Signals s4 und zeitlich vor dem vierten zeitlichen Ende tₑ₄ des vierten Signals s4 liegt. Ein vierter Multiplizierer M4 multipliziert das weitere Empfängerausgangssignal S0B mit einem vierten Empfangsfenstersignal SF4 zu einem vierten internen Signal S2Bb. Das vierte Empfangsfenstersignal SF4 weit innerhalb des besagten betreffenden Zeitabschnittes T_{z} einen sechsten zeitlichen Beginn tₛ₆ auf, der zeitlich nach dem vierten zeitlichen Beginn tₛ₄ des vierten Signals s4 und zeitlich vor dem vierten zeitlichen Ende tₑ₄ des vierten Signals s4 liegt. Das vierte Empfangsfenstersignal SF4 weist innerhalb des besagten betreffenden Zeitabschnittes T_{z} ein sechstes zeitliches Ende tₑ₆ auf, das zeitlich nach dem vierten zeitlichen Beginn tₛ₄ des vierten Signals s4 und zeitlich nach dem vierten zeitlichen Ende tₑ₄ des vierten Signals s4 liegt. Ein vierter Filter F4, der vorzugsweise ein Integrator oder ein Tiefpass oder ein Bandpassfilter ist, filtert die Differenz aus dem dritten internen Signal S2Ba und dem vierten internen Signal S2Bb zu einem vierten Filterausgangssignal S8B. Zumindest
- der fünfte zeitliche Beginn tₛ₅ des dritten Empfangsfenstersignals SF3 und/oder
- das fünfte zeitliche Ende tₑ₅ des dritten Empfangsfenstersignals SF3 und/oder
- der sechste zeitliche Beginn tₛ₆ des vierten Empfangsfenstersignals SF4 und/oder
- das sechste zeitliche Ende tₑ₆ des vierten Empfangsfenstersignals SF4 und/oder
- die Verzögerungszeit Δt
hängen von dem vierten Filterausgangssignal S8B ab. Das vierte Filterausgangssignal S8B und/oder ein daraus, insbesondere durch einen nachfolgenden fünften Filter F5, abgeleitetes weiteres Ausgangssignal S4B wird innerhalb dieses betreffenden Zeitabschnitts T_{z} als weiterer Messwert für die Laufzeitbestimmung des vierten Signals s4)in der zweiten Übertragungsstrecke I2 verwendet. Das fünfte Filter F5 ist vorzugsweise ein Tiefpassfilter.

Basierend auf dieser Ausprägung ist eine vierundzwanzigste Ausprägung der Erfindung denkbar, bei der eine zweite Summiervorrichtung Σ2 aus dem Empfängerausgangssignal S0 und dem weiteren Empfängerausgangssignal S0B ein Empfängerausgangssummensignal S0Σ durch Summierung bildet, das Grundlage der Regelung ist. Somit kann direkt ein Mittelwert in Form eines Abstands gemessen werden. Die Regelung wird dann so vorgenommen, dass der dritte Multiplizierer M3 das Empfängerausgangssummensignal S0Σ anstelle des weiteren Empfängerausgangssignals S0B mit dem dritten Empfangsfenstersignal SF3 zu dem dritten internen Signal S2Ba multipliziert. Der vierte Multiplizierer M4 multipliziert das Empfängerausgangssummensignal S0Σ anstelle des weiteren Empfängerausgangssignals S0B mit dem vierten Empfangsfenstersignal SF4 zu dem vierten internen Signal S2Bb.

Statt der Summenbildung kann auch eine Differenzbildung vorgenommen werden. Bei kleinen Signalen erhält man dann direkt den Winkel durch Triangulation. Bei einer solchen fünfundzwanzigsten Ausprägung der Erfindung bildet eine vierte Differenzbildungsvorrichtung (ΔS) aus dem Empfängerausgangssignal S0 und dem weiteren Empfängerausgangssignal S0B ein Empfängerausgangsdifferenzsignal S0Δ durch Differenzbildung. Wie zuvor kann die Regelung nun analog zu der bei der Summenbildung vorgenommen werden. Der dritte Multiplizierer M3 multipliziert das Empfängerausgangsdifferenzsignal S0Δ anstelle des weiteren Empfängerausgangssignals S0B mit dem dritten Empfangsfenstersignal SF3 zu dem dritten internen Signal S2Ba. Der vierte Multiplizierer M4 multipliziert das Empfängerausgangsdifferenzsignal S0Δ anstelle des weiteren Empfängerausgangssignals S0B mit dem vierten Empfangsfenstersignal SF4 zu dem vierten internen Signal S2Bb.

Die folgenden Ausprägungen betreffen die Ausführung der Multiplizierer.

In einer sechsundzwanzigsten Ausprägung der Erfindung wird der erste Multiplizierer M1 als Analogschalter ausgeführt. Der erste Multiplizierer gibt in dieser Ausprägung der Erfindung entweder das Empfängerausgangssignal S0 oder ein vorgegebenes festes Potenzial als erstes internes Signal S2a in Abhängigkeit von dem ersten Empfangsfenstersignal SF1 aus. Da die Vorrichtung symmetrisch sein sollte wird dann auch der zweite Multiplizierer M2 als Analogschalter ausgeführt, der entweder das Empfängerausgangssignal S0 oder ein vorgegebenes festes Potenzial als zweites internes Signal S2b in Abhängigkeit von dem zweiten Empfangsfenstersignal SF2 ausgibt.

In einer siebenundzwanzigsten Ausprägung der Erfindung ist der erste Multiplizierer M1 ebenfalls als Analogschalter ausgeführt, der das Empfängerausgangssignal S0 mit dem ersten internen Signal S2a verbindet und das Empfängerausgangssignal S0 von dem ersten Empfänger D1 trennt, wenn sich das erste Empfangsfenstersignal SF1 in einem ersten Zustand befindet. Der erste Multiplizierer M1 trennt das Empfängerausgangssignal S0 von dem ersten internen Signal S2a und verbindet das Empfängerausgangssignal S0 mit dem ersten Empfänger D1 verbindet, wenn sich das erste Empfangsfenstersignal SF1 in einem zweiten Zustand befindet. Der zweite Multiplizierer M2 ist zur Symmetrierung ebenfalls als Analogschalter ausgeführt, der das Empfängerausgangssignal S0 mit dem zweiten internen Signal S2b verbindet und das Empfängerausgangssignal S0 von dem ersten Empfänger D1 trennt, wenn sich das zweite Empfangsfenstersignal SF2 in einem ersten Zustand befindet. Der zweite Multiplizierer M2 trennt das Empfängerausgangssignal S0 von dem zweiten internen Signal S2b und verbindet das Empfängerausgangssignal S0 mit dem ersten Empfänger D1, wenn sich das zweite Empfangsfenstersignal SF2 in einem zweiten Zustand befindet.

In einer siebenundzwanzigsten Ausprägung der Erfindung ist der erste Multiplizierer M1 als Analogschalter ausgeführt, der das Empfängerausgangssignal S0 mit dem ersten internen Signal S2a verbindet und das Empfängerausgangssignal S0 von dem ersten Empfänger D1 trennt, wenn sich das erste Empfangsfenstersignal SF1 in einem ersten Zustand befindet. Der erste Multiplizierer M1 trennt das Empfängerausgangssignal S0 von dem ersten internen Signal S2a trennt und das Empfängerausgangssignal S0 und den ersten Empfänger D1 verbindet und den Empfänger D von der Strom- oder Spannungsquelle trennt, wenn sich das erste Empfangsfenstersignal SF1 in einem zweiten Zustand befindet. Der zweite Multiplizierer M2 ist als Analogschalter ausgeführt, der das Empfängerausgangssignal S0 mit dem zweiten internen Signal S2b verbindet und das Empfängerausgangssignal S0 von dem ersten Empfänger D1 trennt, wenn sich das zweite Empfangsfenstersignal SF2 in einem ersten Zustand befindet. Der zweite Multiplizierer M2 trennt das Empfängerausgangssignal S0 von dem zweiten internen Signal S2b und verbindet das Empfängerausgangssignal S0 mit dem ersten Empfänger D1 verbindet, wenn sich das zweite Empfangsfenstersignal SF2 in einem zweiten Zustand befindet. Die Vorrichtung um fasst dann aber zusätzlich eine Teilvorrichtung, die das Empfängerausgangssignal S0 mit einer Strom- oder Spannungsquelle verbindet, wenn das Empfängerausgangssignal S0 weder mit dem ersten internen Signal S2a noch mit dem zweiten internen Signal S2b verbunden ist.

Die Erfindung umfasst auch ein zugehöriges Verfahren. Es handelt sich um ein Verfahren zur Laufzeitbestimmung eines ersten, vorzugsweise optischen Signals s1 in einer ersten Übertragungsstrecke I1, die ein Objekt O enthalten kann, zwischen einem Sender H und einem ersten Empfänger D1. Das Verfahren umfasst Schritte, die typischerweise parallel und/oder quasiparallelausgeführt werden. Zu diesen Schritten gehört das optionale, zumindest zeitweise Verzögern eines Sendesignals S5 um eine Verzögerungszeit Δt zu einem Sendewavelet-Signal S5d, wobei dies insbesondere entweder durch eine Verzögerungseinheit ΔT geschieht oder das Sendewavelet-Signal S5d gleich dem Sendesignal S5 ist. Als weiteren Schritt umfasst das Verfahren das bezogen auf einen Zeitabschnitt T_{z} zeitabschnittsweise Hineinsenden eines, insbesondere optischen, ersten Signals s1 in die erste Übertragungsstrecke I1 in Abhängigkeit von dem Sendewavelet-Signal S5d, insbesondere durch einen Sender H. Dabei weist das erste Signal s1 mindestens ein Trägersignal als Signalkomponente auf, das zumindest mit einem Modulationssignal in der Amplitude und/oder Phase und/oder Polarisation und/oder Wellenlänge und/oder Amplitudenmodulationsfrequenz und/oder der spektralen Zusammensetzung moduliert ist. In jedem Zeitabschnitt T_{z}, in dem insbesondere der Sender H das erste Signal s1 sendet, weist das erste Signal s1 innerhalb dieses betreffenden Zeitabschnitts T_{z} einen ersten zeitlichen Beginn tₛ₁ und ein erstes zeitliches Ende tₑ₁ auf. Als weiteren Schritt umfasst das Verfahren das Modifizieren des ersten Signals s1 beim Durchgang durch die erste Übertragungsstrecke I1 zu einem, insbesondere optischen, zweiten Signal s2. Dabei betrifft diese Modifikation die Amplitude und/oder die Phase und/oder die Polarisation und/oder die Wellenlänge und/oder die Amplitudenmodulationsfrequenz und/oder die spektrale Zusammensetzung des zweiten Signals s2 im Vergleich zum ersten Signal s1. Als weiteren Schritt umfasst das Verfahren das Empfangen des zweiten Signals s2 nach Austritt aus der Übertragungsstrecke I1 innerhalb dieses betreffenden Zeitabschnitts T_{z}, insbesondere durch den ersten Empfänger D1. Ein weiterer Schritt umfasst das Umwandeln des zweiten Signals s2 in ein Empfängerausgangssignal S0 insbesondere in dem ersten Empfänger D1. Des Weiteren umfasst das Verfahren den Schritt des Multiplizierens des Empfängerausgangssignals S0 mit einem ersten Empfangsfenstersignal SF1 zu einem ersten internen Signal S2a, insbesondere durch einen ersten Multiplizierer M1. Das erste Empfangsfenstersignal SF1 weist dabei innerhalb des besagten betreffenden Zeitabschnittes T_{z} einen zweiten zeitlichen Beginn tₛ₂ auf, der zeitlich vor dem ersten zeitlichen Beginn tₛ₁ des ersten Signals s1 und zeitlich vor dem zeitlichen Ende tₑ₁ des ersten Signals s1 liegt. Das erste Empfangsfenstersignal SF1 weist innerhalb des besagten betreffenden Zeitabschnittes T_{z} ein zweites zeitliches Ende tₑ₂ auf, das zeitlich nach dem ersten zeitlichen Beginn tₛ₁ des ersten Signals s1 und zeitlich vor dem zeitlichen Ende tₑ₁ des ersten Signals s1 liegt. Ein paralleler Schritt des Verfahrens umfasst das Multiplizieren des Empfängerausgangssignals S0 mit einem zweiten Empfangsfenstersignal SF2 zu einem zweiten internen Signal S2b innerhalb dieses betreffenden Zeitabschnitts T_{z}, insbesondere durch einen zweiten Multiplizierer M2. Dabei weist das zweite Empfangsfenstersignal SF2 innerhalb des besagten betreffenden Zeitabschnittes T_{z} einen dritten zeitlichen Beginn tₛ₃auf, der zeitlich nach dem ersten zeitlichen Beginn tₛ₁ des ersten Signals s1 und zeitlich vor dem zeitlichen Ende tₑ₁ des ersten Signals s1 liegt. Das zweite Empfangsfenstersignal SF2 weist innerhalb des besagten betreffenden Zeitabschnittes T_{z} ein drittes zeitliches Ende tₑ₃ auf, das zeitlich nach dem ersten zeitlichen Beginn tₛ₁ des ersten Signals s1und zeitlich nach dem zeitlichen Ende tₑ₁ des ersten Signals s1 liegt. Ein weiterer Schritt ist das Filtern der Differenz aus dem ersten internen Signal S2a und dem zweiten internen Signal S2b zu einem ersten Filterausgangssignal S8, insbesondere durch einen ersten Filter F1. Ebenso umfasst das Verfahren das Bilden eines Ausgangssignals S4 in Abhängigkeit von dem ersten Filterausgangssignal S8 und/oder Verwendung des ersten Filterausgangssignals S8 als Ausgangssignal S4, insbesondere durch einen nachfolgenden zweiten Filter F2. Die Verwendung des Ausgangssignals S4 als Repräsentanten für einen Messwert für die Laufzeitbestimmung des ersten Signals s1 und/des zweiten Signals s2 in Summe in der ersten Übertragungsstrecke I1 ist ebenfalls Teil des Verfahrens. Ganz wesentlich für das erfindungsgemäße Verfahren ist, dass dabei zumindest
- der zweite zeitliche Beginn tₛ₂ des ersten Empfangsfenstersignals SF1 und/oder
- das zweite zeitliche Ende tₑ₂ des ersten Empfangsfenstersignals SF1 und/oder
- der dritte zeitliche Beginn tₛ₃ des zweiten Empfangsfenstersignals SF2 und/oder
- das dritte zeitliche Ende tₑ₃ des zweiten Empfangsfenstersignals SF2 und/oder
- die Verzögerungszeit Δt
von dem ersten Filterausgangssignal S8 abhängen.

Eine dreißigste Ausprägung des Verfahrens betrifft ein Verfahren zur Laufzeitbestimmung für ein erstes, insbesondere optisches, Signal s1 in einer ersten Übertragungsstrecke I1 zwischen einem Sender H und einem ersten Empfänger D1. Dabei sendet der Sender H ein erstes Signal s1 in die erste Übertragungsstrecke I1 hinein, das nach Durchgang (und damit Verzögerung) durch mindestens einen Teil der ersten Übertragungsstrecke I1 von dem ersten Empfänger D1 als zweites Signal s2, das ein modifiziertes erstes Signal s1 ist, empfangen und in ein Empfängerausgangssignal S0 gewandelt wird. In dem ersten Empfänger D1 wird das zweite Signal s2 in zwei zeitlichen Empfangsfenstern, einem ersten Empfangsfenster SF1 mit einer ersten zeitlichen Länge T1 und einem zweiten Empfangsfenster SF2 mit einer zweiten zeitlichen Länge T2, ausgewertet. Der Beginn des ersten Signals s1 ist ausschließlich im ersten Empfangsfenster SF1 und das Ende des ersten Signals s1 ist ausschließlich im zweiten Empfangsfenster SF2 enthalten. Das Verfahren zeichnet sich dadurch aus, dass das Empfängerausgangssignal S0 einen ersten Signalanteil, der dem ersten Empfangsfenster SF1 zuzuordnen ist, und einen zweiten Signalanteil, der dem zweiten Empfangsfenster SF2 zuzuordnen ist, umfasst, wobei der über einen vordefinierten Zeitabschnitt T_{z} gemittelte erste Signalanteil bis auf eine Abweichung genauso groß ist wie der über den Zeitabschnitt T_{z} gemittelte zweite Signalanteil. Diese die Abweichung wird zumindest zeitweise als Regelsignal für die zeitliche Lage
- eines oder beider Empfangsfenster SF1,SF2 in Relation zu dem ersten Signal s1 und/oder
- der zeitlichen Lage des ersten Signals s1 in Relation zu den beiden Empfangsfenstern SF1,SF2, und/oder
- der ersten zeitlichen Länge T1 des ersten Empfangsfensters und/oder
- der zweiten zeitlichen Länge T2 des zweiten Empfangsfensters SF1,SF2 genutzt.

In einer weiteren Ausprägung dieses Verfahrens werden diese Abweichung sowie ein erstes Korrektursignal SKE miteinander addiert (summiert). Im Signalpfad anschließend wird diese Summe integriert und das sich ergebende Integrationsergebnis an Stelle der besagten Abweichung als Regelsignal genutzt.

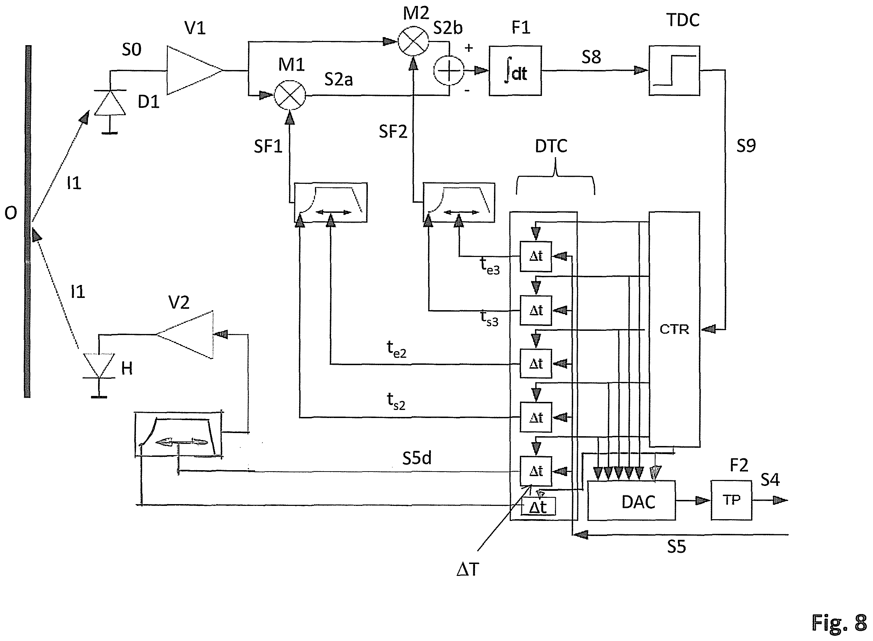

In Fig. 8 ist eine generelle Version der erfindungsgemäßen Vorrichtung dargestellt. Das Sendesignal S5 wird in der Verzögerungseinheit ΔT zum Sendewavelet-Signal S5d verzögert. Diese Verzögerung hängt von dem digitalisierten Filterausgangssignal S9 ab. Das Sendewavelet-Signal S5d steuert über den Sendeverstärker V2 den Sender H, der hier eine Laser-Diode ist. Besonders bevorzugt ist das Sendesignal S5 ein gepulstes Signal. Der Sender H sendet in die erste Übertragungsstrecke I1 hinein, deren Teil das Objekt O ist. der erste Empfänger D1 empfängt das durch den Durchgang durch die erste Übertragungsstrecke modifizierte Signal und wandelt es in das Empfängerausgangssignal S0 um, dass von dem Eingangsverstärker V1 verstärkt wird. Der erste Multiplizierer M1 multipliziert das Empfängerausgangssignal S0 mit dem ersten Empfangsfenstersignal SF1 zum ersten internen Signal S2a. Der zweite Multiplizierer M2 multipliziert das Empfängerausgangssignal S0 mit dem zweiten Empfangsfenstersignal SF2 zum zweiten internen Signal S2b. Der erste Filter F1 integriert hier die Differenz des ersten internen Signals S2a und des zweiten internen Signals S2b zum ersten Filterausgangssignal S8. Ein Zeit-zu-Digital-Konverter digitalisiert das Signal zum digitalisierten Filterausgangssignal S9. Vorzugsweise handelt es sich um einen Komparator oder einem Inverter oder dergleichen. In diesem Beispiel wird durch das digitale Filterausgangssignal S9 ein Regler CTR gesteuert, der mittels eines Digital-zu-Zeitsignal-Konverters DTC den zweiten Beginn tₛ₂ des ersten Empfangsfenstersignals SF1 und das zweite Ende tₑ₂ des ersten Empfangsfenstersignals SF1 und den dritten Beginn tₛ₃ des zweiten Empfangsfenstersignals SF2 und das dritte Ende tₑ₃ des zweiten Empfangsfenstersignals SF2 sowie die besagte Verzögerung des Sendesignals S5 zum Sendewavelet-Signal S5d bestimmt. Typischerweise ist der Digital-zu-Zeitsignal-Konverter eine Kombination aus Multiplexern, die das in einer Verzögerungskette stufenweise verzögerte digitalisierte Filterausgangssignal S9 an den verschiedenen Stufen fest verdrahtet oder programmierbar oder einstellbar abgreifen.

Ein Digital zu Analog-Wandler erzeugt gleichzeitig aus dem digitalisieren Filterausgangssignal S9, genauer hier aus daraus abgeleiteten Signalen nach Filterung in einem Tiefpass F2 das Ausgangssignal S4.

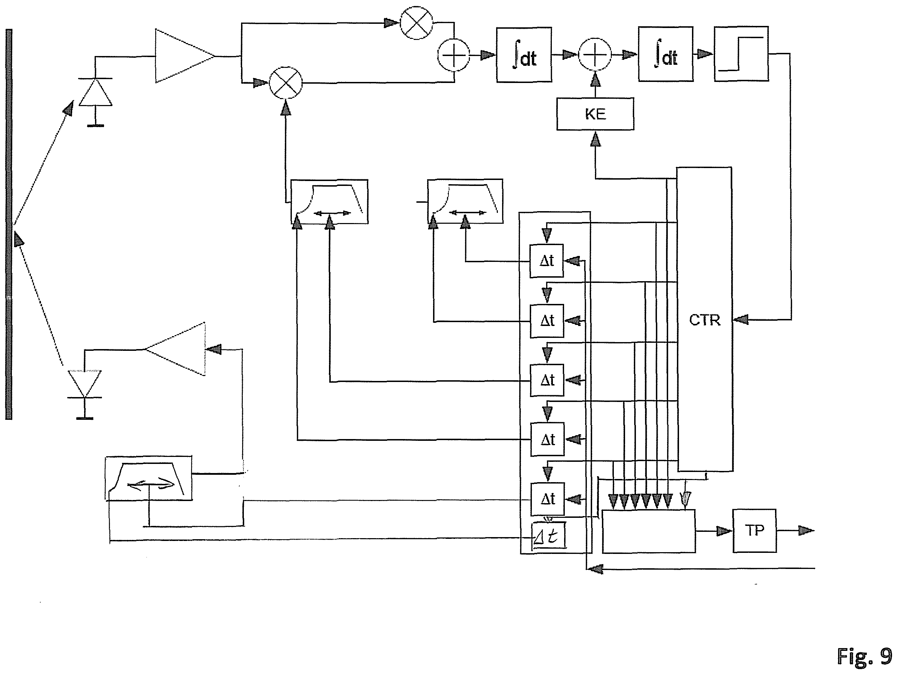

Fig. 9 entspricht der Fig. 8 mit dem Unterschied, dass das Filterausgangssignal S8 mit einem ersten Korrektursignal SK1 zu einem zweiten Filtereingangssignal S10 multipliziert und dann in einem dritten Filter F3 zu einem dritten Filterausgangssignal F11 integriert wird, dass dann als Eingang für den Zeit-zu-Digital-Wandler TDC dient. Das erste Korrektursignal SK1 wird durch eine Korrektursignalerzeugungseinheit KE, die typischerweise eine Digital-zu-Ladung-Wandeleinheit ist, in Abhängigkeit von dem digitalisierten Filterausgangssignal S9 erzeugt. Durch diese zweistufige Delta-Sigma-Wandlung wird das Systemrauschen, insbesondere durch Quantisierungsfehler minimiert und damit die Auflösung der Messung maximiert.

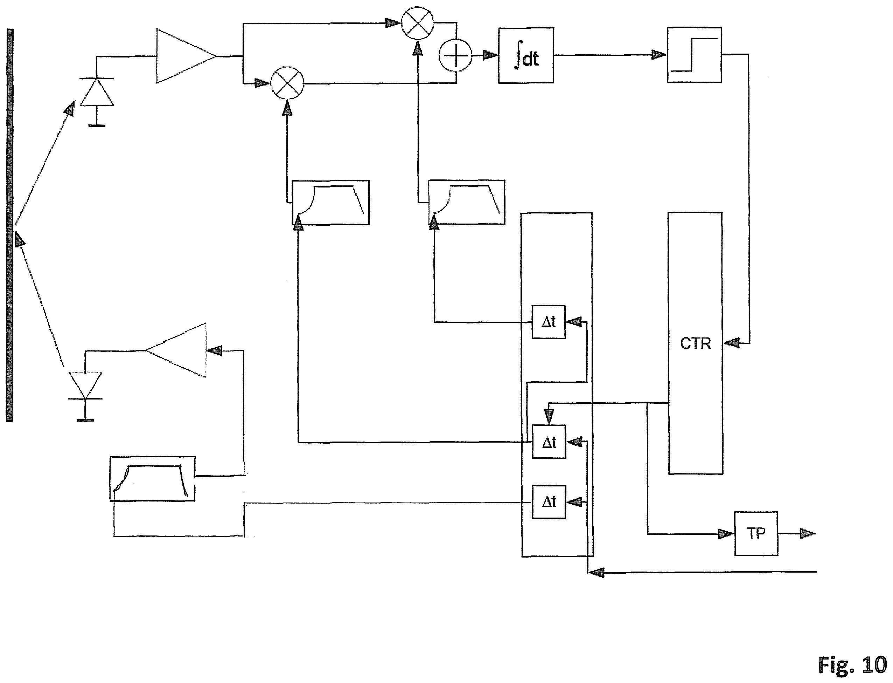

Fig. 10 entspricht einer vereinfachten Version der Fig. 8. Auch in diesem Beispiel wird durch das digitale Filterausgangssignal S9 der Regler CTR gesteuert, der mittels eines Digital-zu-Zeitsignal-Konverters DTC jedoch nur den zweiten Beginn tₛ₂ des ersten Empfangsfenstersignals SF1 und den dritten Beginn tₛ₃ des zweiten Empfangsfenstersignals SF2 sowie die besagte Verzögerung des Sendesignals S5 zum Sendewavelet-Signal S5d bestimmt. Das zweite Ende tₑ₂ des ersten Empfangsfenstersignals SF1 und das dritte Ende tₑ₃ des zweiten Empfangsfenstersignals SF2 werden entweder durch eine fest vorgegeben zeitliche Fenstergröße synchron mitverschoben oder alternativ dazu konstant gehalten. Das einzige verbliebene Ausgangssignal des Reglers CTR kann direkt über den Tiefpass F2 als Ausgangssignal S4 dienen.

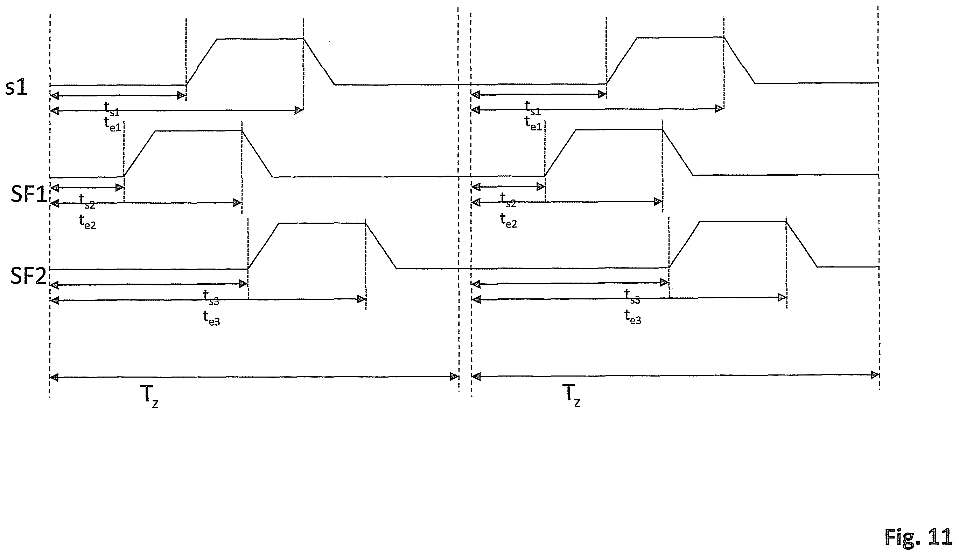

Fig. 11 zeigt ein Zeitschema der Empfangsfenstersignale SF1 und SF2 sowie des ersten Signals s1.

### Vorteile der Erfindung

Durch diese Änderungen ergeben sich erhebliche Vorteile:
1. Lange Auszeiten der LED
2. Niedrige Anforderungen an Offset und Verstärkung der Verstärkerkette
3. niedrigere Stromaufnahme oder höhere Bandbreite
4. Skalierbarkeit (mehrere Fotodioden im Parallelbetrieb)
5. Leichte Handhabung ohne optische Kopplung ermöglicht Chiplösungen
6. Niedriger Preis

### BEZUGSZEICHENLISTE (Fign. 1 bis 7)

- α: erste zeitliche Kompression eines Wavelets
- α₁: erste zeitliche Kompression des ersten Wavelets WL1
- α₂: zweite zeitliche Kompression des zweiten Wavelets WL2
- Δt: Verzögerung des Empfängerausgangssignals S0 gegenüber dem Sendewavelet-Signal S5d
- CTR: Regler
- E: Empfänger der Übertragungsstrecke I1
- F1: erstes Filter
- F1b: weiteres erstes Filter
- F2: zweites Filter
- I1: Übertragungsstrecke
- K1: Korrektursignal
- KE: Korrektureinheit
- M1: erster Multiplizierer
- M1b: zweiter Multiplizierer
- ω: Frequenz
- φ: Phase
- Ref: Referenzwert
- S: Sender der Übertragungsstrecke I1
- S0: Empfängerausgangssignal
- S2: Filtereingangssignal
- S2b: zweites Filtereingangssignal
- S5d: Sendewavelet-Signal
- S8: Skalar-Produktsignal
- S8s: Skalar-Produktsignal
- S8a: erstes Skalar-Produktvorsignal
- S8b: zweites Skalar-Produktvorsignal
- S9: zeitkontinuierliches, wertdiskretes Bewertungssignal
- S10: korrigiertes Skalar-Produktsignal
- S11: gefiltertes Skalar-Produktsignal
- Σ1: erster Summierer
- Σ2: zweiter Summierer
- tₘ: geregelter Parameter des Sendewavelet- und/oder Analysewavelet-Signals
- t₀: erster Bezugszeitpunkt des ersten Wavelets WL1 bei Regelung der Verzögerungszeit tᵥ des zweiten Bezugszeitpunktes t₀+tᵥ des zweiten Wavelets WL2 bzw. zweiter Bezugszeitpunkt des zweiten Wavelets WL2 bei Regelung der Verzögerungszeit tᵥ des ersten Bezugszeitpunktes t₀+tᵥ des ersten Wavelets WL1
- t₀+tₛ: Schneidezeitpunkt (d.h. Zeitpunkt, zu dem das Skalar-Produktsignal S8 bzw. S8s den Referenzwert Ref annimmt)
- t₀+tᵥ: erster Bezugszeitpunkt t₀+tᵥ des ersten Wavelets WL1 bei Regelung desselben bzw. zweiter Bezugszeitpunktes t₀+tᵥ des zweiten Wavelets WL2 bei Regelung desselben
- t_{sy}: Synchronisationssignal
- tᵥ: Verzögerung
- TDC: Zeit-zu-Digital-Wandler (typischerweise ein Komparator)
- WG1: Sendewaveletsignal-Generator
- WG2: erster Analysewaveletsignal-Generator
- WG3: zweiter Analysewaveletsignal-Generator
- WL1: erstes Wavelet
- WL2: zweites Wavelet
- WS1: erstes Analysewavelet-Signal
- WS2: zweites Analysewavelet-Signal
- WS1,S0: Skalar-Produkt zwischen dem (ersten) Analysewavelet-Signal WS1 und dem Empfängerausgangssignal S0

### BEZUGSZEICHENLISTE (Fign. 8 bis 11)

- ΔS: Differenzbildungsvorrichtung
- ΔS2: Differenzsignal aus dem ersten internen Signal S2a und dem zweiten internen Signal 22b
- Δt: Verzögerungszeit, um die die Verzögerungseinheit ΔT das Sendesignal S5 zum verzögerten Sendewavelet-Signal S5d verzögert
- ΔT: Verzögerungseinheit
- ADC: Analog-zu-Digital-Wandler. Es kann sich im einfachsten Fall um einen Komparator, Inverter, Schmitt-Trigger etc. als Ein-Bit-Analog-zu-Digital-Wandler handeln.
- CTR: Regler
- D1: erster Empfänger
- D2: weiterer Empfänger
- DAC: Digital zu Analog Konverter
- f(ΔS2): Filterfunktion des ersten Filters F1 mit dem Parametersignal ΔS2
- F1: erstes Filter. Das erste Filter F1 ist vorzugsweise ein lineares Filter mit einer Filterfunktion f(ΔS2) ist, wobei ΔS2 das Differenzsignal aus dem ersten internen Signal S2a und dem zweiten internen Signal S2b darstellt.
- F2: zweites Filter
- F3: drittes Filter. Das dritte Filter F3 ist vorzugsweise ein lineares Filter mit einer Filterfunktion f₃(S10) ist.
- F4: viertes Filter. Das vierte Filter F4 ist vorzugsweise ein lineares Filter mit einer Filterfunktion f4(ΔS2B) ist, wobei ΔS2B das Differenzsignal aus dem dritten internen Signal S2Ba und dem vierten internen Signal S2Bb darstellt.
- F5: fünftes Filter
- I1: erste Übertragungsstrecke
- I2: zweite Übertragungsstrecke
- I_{H}: Senderstrom. Die ist der elektrische Strom, den der Sender H für seinen Betrieb aufnimmt.
- I_{HM}: Sendestromerfassungsvorrichtung zur Erfassung des Senderstromes I_{H}
- IMS: Sendestrommesssignal. Dieses Signal spiegelt den durch den Sendestromerfassungsvorrichtung I_{HM} erfassten Senderstrom I_{H} wieder.
- KE: Korrektursignalerzeugungseinheit, die das erste Korrektursignal SK1 in Abhängigkeit von dem digitalisierten Filterausgangssignal S9 bildet.
- LED: lichtemittierende Diode
- M1: erster Multiplizierer
- M2: zweiter Multiplizierer
- M3: dritter Multiplizierer
- M4: vierter Multiplizierer
- O: Objekt, dessen Abstand mittels Laufzeitmessung erfasst werden soll
- O2: weiteres Objekt, dessen Abstand mittels Laufzeitmessung erfasst werden soll
- Ref: optionaler Vorgabewert für den Regler CTR
- Σ1: erster Summierer
- Σ2: zweite Summiervorrichtung
- S0: Empfängerausgangssignal des ersten Empfängers D1
- S0B: weiteres Empfängerausgangssignal des weiteren Empfängers D2
- S0Δ: Empfängerausgangsdifferenzsignal
- S0∑: Empfängerausgangssummensignal
- s1: erstes, insbesondere optisches, Signal
- s2: zweites, insbesondere optisches, Signal, dass durch die Laufzeit insbesondere gegenüber dem ersten Signal s1 verzögert oder sonst wie modifiziert ist.
- s3: drittes, insbesondere optisches, Signal
- s4: viertes, insbesondere optisches, Signal, dass durch eine weitere Laufzeit insbesondere gegenüber dem dritten Signal s3 verzögert oder sonst wie modifiziert ist.
- S2a: erstes internes Signal
- S2b: zweites internes Signal
- S2Ba: drittes internes Signal
- S2Bb: viertes internes Signal
- S4: erstes Ausgangssignal
- S4B: weiteres Ausgangssignal
- S5: Sendesignal
- S5d: Sendewavelet-Signal
- S8: erstes Filterausgangssignal des ersten Filters F1
- S8B: viertes Filterausgangssignal des vierten Filters F4
- S9: erstes digitalisiertes Filterausgangssignal
- S10: zweites Filtereingangssignal
- S11: drittes Filterausgangssignal
- S12: erstes Reglerausgangssignal
- SF1: erstes Empfangsfenstersignal
- SF2: zweites Empfangsfenstersignal
- SF3: drittes Empfangsfenstersignal
- SF4: viertes Empfangsfenstersignal
- SK1: erstes Korrektursignal
- T: Temperatur des Senders
- tₐ: Anstiegszeit tₐ, mit der der Sender H zu senden beginnt
- t_{f}: Abfallszeit t_{f}, mit der der Sender H zu senden aufhört
- tₖ₁: erste zeitliche Mindestkonstanzzeit, in der das erste Empfangsfenstersignal SF1 von Null verschieden ist und sich weniger als 25% in der Amplitude, vorzugsweise gar nicht, ändert
- tₖ₂: zweite zeitliche Mindestkonstanzzeit, in der das zweite Empfangsfenstersignal SF2 von Null verschieden ist und sich weniger als 25% in der Amplitude, vorzugsweise gar nicht, ändert
- tₛ₁: erster zeitlicher Beginn des ersten Signals s1
- tₑ₁: erstes zeitliches Ende des ersten Signals s1
- tₛ₂: zweiter zeitlicher Beginn des ersten Empfangsfenstersignals SF1
- tₑ₂: zweites zeitliches Ende des ersten Empfangsfenstersignals SF1
- tₛ₃: dritter zeitlicher Beginn des zweiten Empfangsfenstersignals SF2
- tₑ₃: drittes zeitliches Ende des zweiten Empfangsfenstersignals SF2
- tₛ₄: vierter zeitlicher Beginn des dritten Signals s3
- tₑ₄: vierter zeitliches Ende des dritten Signals s3
- t_{ez}: zeitliches Ende des Zeitabschnitts T_{z}
- t_{sz}: zeitlicher Beginn des Zeitabschnitts T_{z}
- tₛ₅: fünfter zeitlicher Beginn des dritten Empfangsfenstersignals SF3
- tₑ₅: fünftes zeitliches Ende des dritten Empfangsfenstersignals SF3
- tₛ₆: sechster zeitlicher Beginn des vierten Empfangsfenstersignals SF4
- tₑ₆: sechstes zeitliches Ende des vierten Empfangsfenstersignals SF4
- TS: Temperatursensor
- TSS: Temperatursensorsignal
- T_{z}: Zeitabschnitt
- V1: Eingangsverstärker
- V2: Sendeverstärker

## Patentansprüche

1. Vorrichtung zur Wandlung einer zeitlichen Verzögerung eines Ausgangssignals (S0) eines Empfängers (E) einer Übertragungsstrecke (I1) gegenüber einem von einem Sender (S) in die Übertragungsstrecke (I1) hinein gesendeten Sendewavelet-Signals (S5d) in einen Digital-Wert, insbesondere in einen Binär-Wert, mit
- einem Sendewaveletsignal-Generator (WG1) zur Erzeugung des Sendewavelet-Signals (S5d) auf Basis eines ersten zeitlichen Wavelet (WL1) mit einem ersten Bezugszeitpunkt (t₀), wobei das Sendewavelet-Signal (S5d) hinsichtlich seiner zeitlichen Lage, d.h. seines Anfangs- und/oder seines Endzeitpunkts, wobei beide Zeitpunkte veränderbar sind, durch von dem Sendewaveletsignal-Generator (WG1) vorgebbare Parameter definiert ist,
- einem ersten Analysewaveletsignal-Generator (WG2) zur Erzeugung eines ersten Analysewavelet-Signals (WS1) auf Basis eines zweiten zeitlichen Wavelets (WL2) mit einem zweiten Bezugszeitpunkt (t₀+tᵥ), wobei das erste Analysewavelet-Signal (WS1) hinsichtlich seiner zeitlichen Lage, d.h. seines Anfangs- und/oder seines Endzeitpunkts, wobei beide Zeitpunkte veränderbar sind, durch von dem ersten Analysewaveletsignal-Generator (WG2) vorgebbare Parameter definiert ist,
- einer Skalarprodukteinheit (WS1,SO) zur Berechnung eines zeitlichen Skalarproduktsignals (S8) aus dem Empfängerausgangssignal (S0) und dem ersten Analysewavelet-Signal (WS1),
- einem Zeit-zu-Digital-Wandler (TDC) zur Bildung eines zeitkontinuierlichen, wertdiskreten binären Bewertungssignals (S9) für die Dauer eines vorgebbaren Messzeitintervals durch Vergleich der Größe des Skalarproduktsignals (S8) mit einem ersten Referenzwert (Ref) und zum Wechseln des Wertes des wertdiskreten binären Bewertungssignals (S9) zu demjenigen relativ zum ersten Bezugszeitpunkt (t₀) zu betrachtenden Zeitpunkt (t₀+tₛ), zu dem das Skalarproduktsignal (S8) gleich dem Referenzwert (Ref) oder größer als der Referenzwert (Ref) wird, und
- einem Regler (CTR) zur Änderung entweder mindestens eines der das Sendewavelet-Signal (S5d) definierenden Parameter im Sendewaveletsignal-Generator (WG1) oder mindestens eines der das erste Analysewavelet-Signal (WS1) definierenden Parameter in dem ersten Analysewaveletsignal-Generator (WG2) oder sowohl mindestens eines der das Sendewavelet-Signal (S5d) definierenden Parameter in dem Sendewaveletsignal-Generator (WG1) als auch mindestens eines der das erste Analysewavelet-Signal (WS1) definierenden Parameter in dem ersten Analysewaveletsignal-Generator (WG2) definierenden Parameter, und zwar in Abhängigkeit von dem Zeitpunkt (t₀+tₛ), zu dem relativ zu dem Bezugszeitpunkt (t₀) des ersten zeitlichen Wavelet (WL1) des Sendewavelet-Signals (S5d) das Skalarproduktsignal (S8) gleich dem Referenzwert (Ref) oder größer als der Referenzwert (Ref)wird, wobei der Zeitpunkt (t₀+tₛ), zu dem relativ zu dem Bezugszeitpunkt (t₀) des ersten zeitlichen Wavelet (WL1) des Sendewavelet-Signals (S5d) das Skalarproduktsignal (S8) gleich dem Referenzwert (Ref) oder größer als der Referenzwert (Ref) ist, der zeitliche Arbeitspunkt ist,
**dadurch gekennzeichnet ,**
- **dass** das erste Wavelet (WL1) des Sendewaveletsignal-Generators (WG1) und das zweite Wavelet (WL2) des ersten Analysewaveletsignal-Generators (WG2) nicht identisch sind und derart ausgestaltet sind, dass der Wert des Skalarproduktsignals (S8) in einem zeitlichen Bereich um den zeitlichen Arbeitspunkt herum monoton fallend oder monoton steigend von der zeitlichen Verzögerung (Δt) des Sendewavelet-Signals (S5d) von dem Sender der Übertragungsstrecke (I1) zu dessen Empfänger (E) abhängt,
- wobei die zeitliche Verzögerung (Δt) in einem zeitlichen Intervall liegt, dessen Länge von Null verschieden ist.

2. Vorrichtung nach Anspruch 1, **dadurch gekennzeichnet, dass** das erste Wavelet (WL1) des Sendewaveletsignal-Generators (WG1) und das zweite Wavelet (WL2) des ersten Analysewaveletsignal-Generators (WG2) nicht identisch sind und derart ausgestaltet sind, dass der Wert des Skalarproduktsignals (S8) in einem zeitlichen Bereich um den zeitlichen Arbeitspunkt herum streng monoton fallend oder streng monoton steigend von der zeitlichen Verzögerung (Δt) des Sendewavelet-Signals (S5d) von dem Sender der Übertragungsstrecke (I1) zu dessen Empfänger (E) abhängt.

3. Vorrichtung nach Anspruch 1 oder 2, **dadurch gekennzeichnet, dass** die Skalarprodukteinheit (WS1,SO) versehen ist mit einem Multiplizierer (M1) zur Berechnung eines Filtereingangssignals (S2) als Multiplikation des Empfängerausgangssignals (SO) und des ersten Analysewavelet-Signals (WS1) und mit einem ersten Filter (F1), insbesondere einem Tiefpassfilter, zur Filterung des Filtereingangssignals (S2).

4. Vorrichtung nach Anspruch 3, **dadurch gekennzeichnet, dass** das erste Filter (F1) ein Integrator ist oder als solcher betrieben wird.

5. Vorrichtung nach einem der Ansprüche 1 bis 4, **dadurch gekennzeichnet, dass** der Zeit-zu-Digital-Wandler (TDC) ein Komparator ist.

## Claims

1. A device for converting into a digital value, particularly a binary value, a temporal delay of an output signal (S0) of a receiver (E) of a transmission path (I1) relative to a transmission wavelet signal (S5d) transmitted into the transmission path (I1) by a transmitter (S), comprising
- a transmission wavelet signal generator (WG1) for generating the transmission wavelet signal (S5d) on the basis of a first temporal wavelet (WL1) having a first reference time point (t₀), wherein the transmission wavelet signal (S5d) is defined, by respective parameters adapted to be predetermined by the transmission wavelet signal generator (WG1), with respect to its temporal position, i. e. its start and/or its end time point, wherein both time points are variable,
- a first analysis wavelet generator (WG2) for generating a first analysis wavelet signal (WS1) on the basis of a second temporal wavelet (WL2) having a second reference time point (t₀+tᵥ), wherein the first analysis wavelet signal (WS1) is defined, by respective parameters adapted to be predetermined by the first analysis wavelet signal generator (WG2), with respect to its temporal position, i. e. its start and/or its end time point, wherein both time points are variable,
- a scalar product unit (WS1, SO) for calculating a temporal scalar product signal (S8) from the receiver output signal (S0) and the first analysis wavelet signal (WS1),
- a time-to-digital converter (TDC) for generating a time-continuous value-discrete binary evaluation signal (S9) for the length of a predeterminable measuring time interval by comparing the magnitude of the scalar product signal (S8) with a first reference value (Ref) and for changing the value of the value-discrete binary evaluation signal (S9) at that time point (t₀+tₛ) to be considered relative to the first reference time point (t₀) at which the scalar product signal (S8) becomes equal to the reference value (Ref) or larger than the reference value (Ref), and
- a controller (CTR) for varying either at least one of the parameters defining the transmission wavelet signal (S5d) in the transmission wavelet signal generator (WG1) or at least one of the parameters defining the first analysis wavelet signal (WS1) in the first analysis wavelet signal generator (WG2) or both at least one of the parameters defining the transmission wavelet signal (S5d) in the transmission wavelet signal generator (WG1) and at least one of the parameters defining the first analysis wavelet signal (WS1) in the first analysis wavelet signal generator (WG2), namely in dependence on the time point (t₀+tₛ) at which, relative to the reference time point (t₀) of the first temporal wavelet (WL1) of the transmission wavelet signal (S5d), the scalar product signal (S8) becomes equal to the reference value (Ref) or larger than the reference value (Ref), wherein the time point (t₀+tₛ) at which, relative to the reference time point (t₀) of the first temporal wavelet (WL1) of the transmission wavelet signal (S5d), the scalar product signal (S8) is equal to the reference value (Ref) or larger than the reference value (Ref) is the temporal operating point,
**characterized in that**
- **in that** the first wavelet (WL1) of the transmit wavelet signal generator (WG1) and the second wavelet (WL2) of the first analysis wavelet signal generator (WG2) are not identical and are configured in such a way that the value of the scalar product signal (S8) in a temporal range around the temporal operating point monotonically decreasing or monotonically increasing depends on the temporal delay (Δt) of the transmit wavelet signal (S5d) from the transmitter of the transmission path (I1) to its receiver (E),
- wherein the time delay (Δt) is situated in a temporal interval whose temporal length is different from zero.

2. The device according to claim 1, **characterized in that** the first wavelet (WL1) of the transmission wavelet signal generator (WG1) and the second wavelet (WL2) of the first analysis wavelet signal generator (WG2) are not identical and are configured in such a way that, in a temporal range around the temporal operating point, the value of the scalar product signal (S8) is dependent, in a strictly monotonously decreasing manner, or in a strictly monotonously increasing manner, on the temporal delay (Δt) of the transmission wavelet signal (S5d) from the transmitter of the transmission path (I1) to its receiver (E),

3. The device according to claim 1 or 2, **characterized in that** the scalar product unit (WS1, SO) is provided with a multiplier (M1) for computing a filter input signal (S2) as a multiplication of the receiver output signal (SO) and of the first analysis wavelet signal (WS1), and with a first filter (F1), particularly a lowpass filter, for filtering the filter input signal (S2).

4. The device according to claim 3, **characterized in that** the first filter (F1) is an integrator or is operated as such.

5. The device according to any of claims 1 to 4, **characterized in that** the time-to-digital converter (TDC) is a comparator.

## Revendications

1. Dispositif pour convertir un retard temporel d'un signal de sortie (S0) d'un récepteur (E) d'une chaîne de transmission (I1) par rapport à un signal d'ondelette d'émission (S5d) émis par un émetteur (S) dans la chaîne de transmission (I1), en une valeur numérique, en particulier en une valeur binaire, avec
- un générateur de signal d'ondelette d'émission (WG1) pour produire le signal d'ondelette d'émission (S5d) sur la base d'une première ondelette temporelle (WL1) avec un premier instant de référence (tₒ), où le signal d'ondelette d'émission (S5d) est défini concernant sa position temporelle, c'est-à-dire son instant de début et/ou de fin, où les deux instants sont modifiables, par des paramètres pouvant être prédéfinis par le générateur de signal d'ondelette d'émission (WG1),
- un premier générateur de signal d'ondelette d'analyse (WG2) pour produire un premier signal d'ondelette d'analyse (WS1) sur la base d'une deuxième ondelette temporelle (WL2) avec un deuxième instant de référence (tₒ+tᵥ), où le premier signal d'ondelette d'analyse (WS1) est défini concernant sa position temporelle, c'est-à-dire son instant de début et/ou de fin, tous deux où les deux instants sont modifiables, par des paramètres pouvant être prédéfinis par le premier générateur de signal d'ondelette d'analyse (WG2),
- une unité de produit scalaire (WS1, SO) pour calculer un signal de produit scalaire temporel (S8) à partir du signal de sortie de récepteur (SO) et du premier signal d'ondelette d'analyse (WS1),
- un convertisseur temps-numérique (CTN) pour former un signal d'évaluation binaire discret, continu dans le temps (S9) pendant la durée d'un intervalle de temps de mesure pouvant être prédéfini par comparaison de l'amplitude du signal de produit scalaire (S8) à une première valeur de référence (Ref) et pour modifier la valeur du signal d'évaluation binaire discret (S9) à l'instant (tₒ+tₛ) à considérer auquel, par rapport au premier instant de référence (tₒ), le signal de produit scalaire (S8) devient égal à la valeur de référence (Ref) ou supérieur à la valeur de référence (Ref), et
- un régulateur (CTR) pour modifier au moins l'un des paramètres définissant le signal d'ondelette d'émission (S5d) dans le générateur de signal d'ondelette d'émission (WG1) ou au moins l'un des paramètres définissant le premier signal d'ondelette d'analyse (WS1) dans le premier générateur de signal d'ondelette d'analyse (WG2) ou aussi bien au moins l'un des paramètres définissant le signal d'ondelette d'émission (S5d) dans le générateur de signal d'ondelette d'émission (WG1) et au moins l'un des paramètres définissant le premier signal d'ondelette d'analyse (WS1) dans le premier générateur de signal d'ondelette d'analyse (WG2), et ce en fonction de l'instant (tₒ+tₛ) auquel, par rapport à l'instant de référence (tₒ) de la première ondelette temporelle (WL1) du signal d'ondelette d'émission (S5d), le signal de produit scalaire (S8) devient égal à la valeur de référence (Ref) ou supérieur à la valeur de référence (Ref), où l'instant (tₒ+tₛ), auquel, par rapport à l'instant de référence (tₒ) de la première ondelette temporelle (WL1) du signal d'ondelette d'émission (S5d), le signal de produit scalaire (S8) est égal à la valeur de référence (Ref) ou supérieur à la valeur de référence (Ref), est le point de fonctionnement temporel,
**caractérisé**
- **en ce que** la première ondelette (WL1) du générateur de signal d'ondelette d'émission (WG1) et la deuxième ondelette (WL2) du premier générateur de signal d'ondelette d'analyse (WG2) ne sont pas identiques et sont configurées de telle sorte que la valeur du signal de produit scalaire (S8) dans une plage temporelle autour du point de fonctionnement temporel dépend en diminuant de manière monotone ou en augmentant de manière monotone du retard temporel (Δt) du signal d'ondelette d'émission (S5d) de l'émetteur de la chaîne de transmission (11) à son récepteur (E),
- où le retard temporel (Δt) est situé dans un intervalle temporel dont la longueur est différente de zéro.

2. Dispositif selon la revendication 1, **caractérisé en ce que** la première ondelette (WL1) du générateur de signal d'ondelette d'émission (WG1) et la deuxième ondelette (WL2) du premier générateur de signal d'ondelette d'analyse (WG2) ne sont pas identiques et sont configurées de telle sorte que la valeur du signal de produit scalaire (S8), dans une plage temporelle autour du point de fonctionnement temporel, dépend en diminuant de manière strictement monotone ou en augmentant de manière strictement monotone du retard temporel (Δt) du signal d'ondelette d'émission (S5d) de l'émetteur de la chaîne de transmission (11) à son récepteur (E).

3. Dispositif selon la revendication 1 ou 2, **caractérisé en ce que** l'unité de produit scalaire (WS1, SO) est munie d'un multiplicateur (M1) pour calculer un signal d'entrée de filtre (S2) comme multiplication du signal de sortie de récepteur (SO) et du premier signal d'ondelette d'analyse (WS1) et d'un premier filtre (F1), en particulier un filtre passe-bas, pour filtrer le signal d'entrée de filtre (S2).

4. Dispositif selon la revendication 3, **caractérisé en ce que** le premier filtre (F1) est un intégrateur ou est amené à fonctionner comme tel.

5. Dispositif selon l'une des revendications 1 à 4, **caractérisé en ce que** le convertisseur temps-numérique (CTN) est un comparateur.
